# EUROPEAN PATENT SPECIFICATION

(11) **EP 3 165 437 B1**
(45) Date of publication and mention of the grant of the patent: **28.11.2018**
(21) Application number: 15815797.4
(22) Date of filing: 03.07.2015
(51) Int. Cl.: F01N 3/10, F01N 13/08, B62K 25/20, B62J 99/00, B62K 11/04, B62M 7/02

(54) **STRADDLED VEHICLE**
GRÄTSCHSITZFAHRZEUG
VÉHICULE À ENFOURCHER

(30) Priority: 04.07.2014 JP 2014138379
(43) Date of publication of application: 10.05.2017
(73) Proprietor: Yamaha Hatsudoki Kabushiki Kaisha, Iwata-shi, Shizuoka 438-8501 (JP)
(72) Inventor: NISHIGAKI, Masato, Iwata-shi Shizuoka 438-8501 (JP); ARAKI, Yuji, Iwata-shi Shizuoka 438-8501 (JP); ISHIZAWA, Kazuhiro, Iwata-shi Shizuoka 438-8501 (JP); WAKIMURA, Makoto, Iwata-shi Shizuoka 438-8501 (JP)
(74) Representative: Zimmermann, Tankred Klaus
(86) International application number: PCT/JP2015/069357
(87) International publication number: WO 2016/002958

(56) References cited:
- EP-A1- 2 557 290
- CN-A- 101 509 410
- JP-A- H06 101 470
- JP-A- 2004 301 019
- JP-A- 2006 250 129
- JP-A- 2010 001 843
- JP-A- 2011 052 605
- JP-A- 2013 024 100
- JP-A- 2013 036 422
- JP-A- 2013 173 498

## Description

### [Technical Field]

The present invention relates to a straddled vehicle.

### [Background Art]

For example, each of the straddled vehicles of Patent Literatures 1 and 2 is provided with a single-cylinder four-stroke engine unit including a horizontal cylinder member. The horizontal cylinder member is a cylinder member in which the central axis of a cylinder hole extends in a front-rear direction. The single-cylinder four-stroke engine unit of Patent Literature 1 is structured such that a catalyst is provided upstream of a silencer. In other words, the catalyst is provided on an exhaust pipe which connects the silencer with an engine main body.

The single-cylinder four-stroke engine unit of Patent Literature 2 is supported by a vehicle body frame in a swingable manner. Such an engine unit is of a unit-swing type. The single-cylinder four-stroke engine unit of Patent Literature 2 is structured such that the engine main body is swingably supported by the vehicle body frame by means of a swing supporter. Above this engine main body, vehicle components such as a vehicle body cover and a seat are provided. The catalyst is provided in the silencer in Patent Literature 2.

### [Citation List]

### [Patent Literatures]

EP 2557290 A1 and JP 2010001843 A describe different arrangements of catalysts used for a straddled vehicle.
[Patent Literature 1] Japanese Unexamined Patent Publication No. 2006-207571
[Patent Literature 2] Japanese Unexamined Patent Publication No. 2013-124637

### [Summary of Invention]

### [Technical Problem]

Improvement in the purification performance of purifying exhaust gas by a catalyst is in demand for a straddled vehicle provided with a single-cylinder four-stroke engine unit. The catalyst is provided upstream of the silencer in Patent Literature 1. The catalyst is therefore close to a combustion chamber. Due to this, the purification performance of purifying the exhaust gas by the catalyst is improved. To improve the purification performance of purifying exhaust gas by a catalyst for the unit-swing-type single-cylinder four-stroke engine unit of Patent Literature 2, the position of the catalyst recited in Patent Literature 1 may be employed. In other words, the catalyst is taken out from the silencer and arranged to be close to the combustion chamber.

However, when the catalyst is arranged to be close to the combustion chamber in Patent Literature 2, the entirety of the catalyst is positioned below the engine main body. Because the catalyst is close to the combustion chamber, the temperature of the catalyst is high during engine running. Due to this, hot air moving up from the catalyst accumulates in a space between the upper surface of the engine main body and the vehicle components. The vehicle components such as the vehicle body cover and the seat are therefore influenced by the heat.

An object of the present invention is to provide a straddled vehicle including a unit-swing-type single-cylinder four-stroke engine unit, in which the influence of heat from a catalyst on vehicle components is restrained while the purification performance of purifying exhaust gas by the catalyst is improved.

### [Solution to Problem]

The inventors of the subject application studied why the heat from the catalyst influenced the vehicle components when the position of the catalyst in Patent Literature 1 is employed in Patent Literature 2.

As described above, the single-cylinder four-stroke engine unit of Patent Literature 2 is structured such that the engine main body is swingably supported by the vehicle body frame by means of a swing supporter. This swing supporter is formed by paired left and right links. The exhaust pipe is provided between these paired left and right links. Due to this, when the catalyst is provided on the exhaust pipe, the links are positioned to the left and to the right of the catalyst. The inventors found that the heat from the catalyst could not easily escape leftward and rightward due to the presence of the links.

In this circumstance, the inventors focused on spaces to the left and to the right of the swing supporter. The space to the right of the swing supporter is open to the right. The space to the left of the swing supporter is open to the left. The inventors conceived of an idea that the heat from the catalyst could escape leftward and rightward when the catalyst was positioned by utilizing the spaces. With this arrangement, the heat transferred upward from the catalyst is restrained. The inventors found that the influence of the heat on the vehicle components provided above the engine main body was restrained.

A straddled vehicle of the present teaching includes: a single-cylinder four-stroke engine unit; a vehicle body frame supporting the single-cylinder four-stroke engine unit; and at least one vehicle component which is at least partially provided above the single-cylinder four-stroke engine unit, the single-cylinder four-stroke engine unit including: an engine main body including a horizontal cylinder member in which one combustion chamber which is partially formed by an inner surface of a cylinder hole and a single-combustion-chamber cylinder exhaust passage member in which exhaust gas exhausted from the one combustion chamber flows are formed, the horizontal cylinder member being provided so that a central axis of the cylinder hole extends in a front-rear direction of the straddled vehicle, the engine main body being swingably supported by the vehicle body frame by a swing supporter, and the engine main body being provided below the at least one vehicle component; a single-combustion-chamber exhaust pipe connected to a downstream end of the single-combustion-chamber cylinder exhaust passage member of the engine main body; a single-combustion-chamber silencer including a discharge port exposed to the atmosphere, the silencer being connected to the single-combustion-chamber exhaust pipe to allow the exhaust gas to flow from a downstream end of the single-combustion-chamber exhaust pipe to the discharge port, and the silencer being configured to reduce sound generated by the exhaust gas; and a single-combustion-chamber main catalyst provided in the single-combustion-chamber exhaust pipe, the length of the single-combustion-chamber main catalyst in a flow direction of the exhaust gas being longer than the maximum width of the single-combustion-chamber main catalyst in a direction orthogonal to the flow direction, the single-combustion-chamber main catalyst being provided at least partially to the right of a right end of the swing supporter or the left of a left end of the swing supporter in a left-right direction of the straddled vehicle, the single-combustion-chamber main catalyst being at least partially provided on the outer side of the engine main body when the straddled vehicle is viewed in an up-down direction, and the single-combustion-chamber main catalyst purifying the exhaust gas exhausted from the one combustion chamber most in an exhaust path from the one combustion chamber to the discharge port.

According to this structure, the single-cylinder four-stroke engine unit of the straddled vehicle includes the engine main body including the horizontal cylinder member. One combustion chamber and the single-combustion-chamber cylinder exhaust passage member are formed in the horizontal cylinder member. A part of the one combustion chamber is formed by the inner surface of the cylinder hole. Exhaust gas exhausted from the one combustion chamber flows in the single-combustion-chamber cylinder exhaust passage member. The horizontal cylinder member is provided so that the central axis of the cylinder hole extends in the front-rear direction of the straddled vehicle. The engine main body is provided below at least one vehicle component. The at least one vehicle component is provided at least partially above the single-cylinder four-stroke engine unit. The single-cylinder four-stroke engine unit includes the single-combustion-chamber exhaust pipe, the single-combustion-chamber silencer, and the single-combustion-chamber main catalyst. The single-combustion-chamber exhaust pipe is connected to the downstream end of the single-combustion-chamber cylinder exhaust passage member of the engine main body. The single-combustion-chamber silencer is provided with the discharge port exposed to the atmosphere. The single-combustion-chamber silencer is connected to the single-combustion-chamber exhaust pipe. The single-combustion-chamber silencer allows the exhaust gas to flow from the downstream end of the single-combustion-chamber exhaust pipe to the discharge port. The single-combustion-chamber silencer reduces noise generated by the exhaust gas. The single-combustion-chamber main catalyst is provided inside the single-combustion-chamber exhaust pipe. The single-combustion-chamber main catalyst purifies the exhaust gas exhausted from one combustion chamber most in the exhaust path from the one combustion chamber to the discharge port. The engine main body is swingably supported by the vehicle body frame by the swing supporter. Due to this, the distance between the left end and the right end of the swing supporter is shorter than the maximum width in the left-right direction of the engine main body. Available spaces are therefore formed to the left of the left end of the swing supporter and to the right of the right end of the swing supporter. The space to the left of the left end of the swing supporter is open to the left. The space to the right of the right end of the swing supporter is open to the right.

The single-combustion-chamber main catalyst is positioned at least partially to the right of the right end of the swing supporter or to the left of the left end of the swing supporter. The single-combustion-chamber main catalyst is structured such that the length in the flow direction of the exhaust gas is longer than the maximum width in the direction orthogonal to the flow direction of the exhaust gas. Due to this, it is possible to provide the single-combustion-chamber main catalyst to the right of the right end of the swing supporter or to the left of the left end of the swing supporter, while stopping the single-combustion-chamber main catalyst from significantly jutting from the engine main body in the left-right direction. As such, the single-combustion-chamber main catalyst is provided by utilizing the space to the left of the left end or to the right of the right end of the swing supporter. It is therefore possible to allow the heat from the single-combustion-chamber main catalyst to escape in the left-right direction. For this reason, the transfer of the heat upward from the single-combustion-chamber main catalyst is restrained. As a result, the influence of the heat on the vehicle components provided above the engine main body is restrained.

Furthermore, when the straddled vehicle is viewed in the up-down direction, the main catalyst single-combustion-chamber main catalyst is provided at least partially on the outer side of the engine main body. The single-combustion-chamber main catalyst is therefore not entirely provided below the engine main body. Due to this, escape of the heat in the horizontal direction from the single-combustion-chamber main catalyst is facilitated. The influence of the heat on the vehicle components provided above the engine main body is therefore further restrained.

In the straddled vehicle of the present teaching, preferably, the swing supporter includes: a link component swingably supported by the vehicle body frame; and an engine supporter constituting a part of the engine main body and connected to the link component to be swingable.

According to this structure, the swing supporter includes the link component and the engine supporter. The link component is swingably supported by the vehicle body frame. The engine supporter constitutes a part of the engine main body and is connected to the link component to be swingable. The engine main body is therefore supported by the vehicle body frame to be swingable about the two swing axes. For this reason, as compared to cases where the engine main body is supported by the vehicle body frame to be swingable about a single axis, the swing supporter is long. Therefore the available spaces formed to the left of the left end of the swing supporter and to the right of the right end of the swing supporter are long. This increases the degree of freedom in the position of the single-combustion-chamber main catalyst. It is therefore possible to provide the single-combustion-chamber main catalyst so that the escape of heat from the single-combustion-chamber main catalyst in the left-right direction is facilitated. For this reason, the transfer of the heat upward from the single-combustion-chamber main catalyst is further restrained. The influence of the heat on the vehicle components provided above the engine main body is therefore further restrained.

In the straddled vehicle of the present teaching, preferably, the single-cylinder four-stroke engine unit includes a fan which is provided leftward or rightward of the center in the left-right direction of the straddled vehicle and is configured to generate an air flow for cooling the engine main body, and the single-combustion-chamber main catalyst and the fan are on the same side of the center in the left-right direction of the straddled vehicle.

According to this structure, the fan is provided leftward or rightward of the center in the left-right direction of the straddled vehicle. The fan generates an air flow for cooling the engine main body. The single-combustion-chamber main catalyst and the fan are on the same side of the center of the straddled vehicle in the left-right direction. Therefore hot air discharged from the single-combustion-chamber main catalyst is sucked by the fan and is discharged outside of the vehicle. For this reason, the transfer of the heat upward from the single-combustion-chamber main catalyst is further restrained. The influence of the heat on the vehicle components provided above the engine main body is therefore further restrained.

In the straddled vehicle of the present teaching, preferably, the engine main body includes a crankcase member including a crankshaft which extends in a left-right direction of the straddled vehicle, and the single-combustion-chamber main catalyst is provided at least partially frontward of the central axis of the crankshaft in the front-rear direction of the straddled vehicle.

According to this structure, the single-combustion-chamber main catalyst is provided at least partially frontward of the central axis of the crankshaft. The crankshaft of the horizontal cylinder member is positioned at a rear portion of the horizontal cylinder member. Due to this, when the swing supporter is provided at a front portion of the engine main body, the single-combustion-chamber main catalyst is easily provided to the right of the right end of or to the left of the left end of the swing supporter.

In the straddled vehicle of the present teaching, preferably, the engine main body includes a crankcase member including a crankshaft which extends in a left-right direction of the straddled vehicle, and when the straddled vehicle is viewed in the left-right direction, the single-combustion-chamber main catalyst is provided at least partially in front of a linear line orthogonal to the central axis of the cylinder hole and orthogonal to the central axis of the crankshaft, in the front-rear direction of the straddled vehicle.

According to this structure, the single-combustion-chamber main catalyst is provided at least partially in front of a linear line orthogonal to the central axis of the cylinder hole and orthogonal to the central axis of the crankshaft. The crankshaft of the horizontal cylinder member is positioned at a rear portion of the horizontal cylinder member. Due to this, when the swing supporter is provided at a front portion of the engine main body, the single-combustion-chamber main catalyst is easily provided to the right of the right end or to the left of the left end of the swing supporter.

In the straddled vehicle of the present teaching, preferably, the single-combustion-chamber main catalyst is provided so that a path length from the one combustion chamber to the upstream end of the single-combustion-chamber main catalyst is shorter than a path length from the downstream end of the single-combustion-chamber main catalyst to the discharge port.

According to this structure, the path length from the one combustion chamber to the upstream end of the single-combustion-chamber main catalyst is shorter than the path length from the downstream end of the single-combustion-chamber main catalyst to the discharge port. The single-combustion-chamber main catalyst is therefore positioned to be relatively close to the combustion chamber. The combustion chamber of the horizontal cylinder member is provided at a front portion of the engine main body. Due to this, when the swing supporter is provided at a front portion of the engine main body, the single-combustion-chamber main catalyst is easily provided to the right of the right end or to the left of the left end of the swing supporter.

In the straddled vehicle of the present teaching, preferably, the single-combustion-chamber main catalyst is provided so that the path length from the one combustion chamber to the upstream end of the single-combustion-chamber main catalyst is shorter than a path length from the downstream end of the single-combustion-chamber main catalyst to the downstream end of the single-combustion-chamber exhaust pipe.

According to this structure, the path length from the one combustion chamber to the upstream end of the single-combustion-chamber main catalyst is shorter than the path length from the downstream end of the single-combustion-chamber main catalyst to the downstream end of the single-combustion-chamber exhaust pipe. The single-combustion-chamber main catalyst is therefore positioned to be relatively close to the combustion chamber. The combustion chamber of the horizontal cylinder member is provided at a front portion of the engine main body. Due to this, when the swing supporter is provided at a front portion of the engine main body, the single-combustion-chamber main catalyst is easily provided to the right of the right end or to the left of the left end of the swing supporter.

In the straddled vehicle of the present teaching, preferably, the at least one vehicle component includes: a seat supported by the vehicle body frame; and a vehicle body cover which is partially provided below a front portion of the seat, below a left portion of the seat, and below a right portion of the seat, and a foot board is provided at a position which is frontward of the seat and at an upper portion of the vehicle body frame.

In the straddled vehicle of the present teaching, preferably, the single-combustion-chamber exhaust pipe includes a catalyst-provided passage member where the single-combustion-chamber main catalyst is provided, an upstream passage member connected to the upstream end of the catalyst-provided passage member, and a downstream passage member connected with the downstream end of the catalyst-provided passage member, a cross-sectional area of the catalyst-provided passage member cut along the direction orthogonal to the flow direction of the exhaust gas is larger than a cross-sectional area of the upstream passage member cut along a direction orthogonal to the flow direction of the exhaust gas in at least a part of the upstream passage member, and the cross-sectional area of the catalyst-provided passage member is larger than a cross-sectional area of the downstream passage member cut along a direction orthogonal to the flow direction of the exhaust gas in at least a part of the downstream passage member.

According to this structure, the single-combustion-chamber exhaust pipe includes the catalyst-provided passage member, the upstream passage member, and the downstream passage member. The single-combustion-chamber main catalyst is provided in the catalyst-provided passage member. The upstream passage member is connected to the upstream end of the catalyst-provided passage member. The downstream passage member is connected to the downstream end of the catalyst-provided passage member. In at least a part of the upstream passage member, the cross-sectional area of the catalyst-provided passage member cut along the direction orthogonal to the flow direction of the exhaust gas is larger than the cross-sectional area of the upstream passage member cut along the direction orthogonal to the flow direction of the exhaust gas. Furthermore, in at least a part of the downstream passage member, the cross-sectional area of the catalyst-provided passage member cut along the direction orthogonal to the flow direction of the exhaust gas is larger than the cross-sectional area of the downstream passage member cut along the direction orthogonal to the flow direction of the exhaust gas. It is therefore possible to use a catalyst with a large cross-sectional area as the single-combustion-chamber main catalyst. As described above, the single-combustion-chamber main catalyst is structured such that the length in the flow direction of the exhaust gas is longer than the maximum width in the direction orthogonal to the flow direction of the exhaust gas. The purification capability of purifying the exhaust gas by the single-combustion-chamber main catalyst is therefore high.

In the straddled vehicle of the present teaching, preferably, the single-cylinder four-stroke engine unit includes a single-combustion-chamber upstream sub-catalyst which is provided upstream in the flow direction of the single-combustion-chamber main catalyst in the single-combustion-chamber cylinder exhaust passage member or the single-combustion-chamber exhaust pipe, the single-combustion-chamber upstream sub-catalyst being configured to purify the exhaust gas.

According to this structure, the single-combustion-chamber upstream sub-catalyst is provided upstream of the single-combustion-chamber main catalyst. Therefore the exhaust gas is purified in the single-combustion-chamber upstream sub-catalyst in addition to the single-combustion-chamber main catalyst. The purification performance of purifying the exhaust gas by the catalysts is therefore improved.

Furthermore, the single-combustion-chamber main catalyst and the single-combustion-chamber upstream sub-catalyst are each downsized while the purification performance of purifying the exhaust gas by the catalysts is maintained, as compared to cases where only the single-combustion-chamber main catalyst is provided. Therefore the single-combustion-chamber upstream sub-catalyst is rapidly activated. The purification performance of purifying the exhaust gas by the catalysts is therefore further improved.

In the straddled vehicle of the present teaching, preferably, the single-cylinder four-stroke engine unit includes a single-combustion-chamber downstream sub-catalyst which is provided downstream in the flow direction of the single-combustion-chamber main catalyst in the single-combustion-chamber cylinder exhaust passage member, the single-combustion-chamber exhaust pipe, or the single-combustion-chamber silencer, the single-combustion-chamber downstream sub-catalyst being configured to purify the exhaust gas.

According to this structure, the single-combustion-chamber downstream sub-catalyst is provided downstream of the single-combustion-chamber main catalyst. Therefore the exhaust gas is purified in the single-combustion-chamber downstream sub-catalyst in addition to the single-combustion-chamber main catalyst. The purification performance of purifying the exhaust gas by the catalysts is therefore improved.

Furthermore, the single-combustion-chamber main catalyst and the single-combustion-chamber downstream sub-catalyst are each downsized while the purification performance of purifying the exhaust gas by the catalysts is maintained, as compared to cases where only the single-combustion-chamber main catalyst is provided. Therefore the single-combustion-chamber main catalyst can be rapidly activated. The purification performance of purifying the exhaust gas by the catalysts is therefore further improved.

In the straddled vehicle of the present teaching, preferably, at least a part of the single-combustion-chamber exhaust pipe, which is upstream in the flow direction of the single-combustion-chamber main catalyst, is formed by a multi-walled pipe which includes an inner pipe and at least one outer pipe covering the inner pipe.

In the straddled vehicle of the present teaching, preferably, the single-combustion-chamber exhaust pipe member includes a catalyst-provided passage member in which the single-combustion-chamber main catalyst is provided, and the single-cylinder four-stroke engine unit includes a catalyst protector which at least partially covers an outer surface of the catalyst-provided passage member.

According to this structure, the single-combustion-chamber exhaust pipe includes the catalyst-provided passage member in which the single-combustion-chamber main catalyst is provided. The outer surface of the catalyst-provided passage member is at least partially covered with the catalyst protector. It is therefore possible to restrain heat radiation from the single-combustion-chamber main catalyst to outside. For this reason, the transfer of the heat upward from the single-combustion-chamber main catalyst is further restrained. The influence of the heat on the vehicle components provided above the engine main body is therefore further restrained.

### [Advantageous Effects]

According to the present teaching, the purification performance of purifying exhaust gas by a catalyst is improved when the influence of heat of the catalyst on a vehicle component is restrained, in a straddled vehicle on which a unit-swing-type single-cylinder four-stroke engine unit is mounted.

### [Brief Description of Drawings]

[FIG. 1] FIG. 1 is a side view of a motorcycle related to an embodiment of the present teaching.
[FIG. 2] FIG. 2 is a bottom view of FIG. 1.
[FIG. 3] FIG. 3 is a side view showing a state in which a vehicle body cover, etc. have been removed from the motorcycle of FIG. 1.
[FIG. 4] FIG. 4 is a bottom view of FIG. 3.
[FIG. 5] FIG. 5 is a schematic diagram of an engine main body and an exhaust system of the motorcycle of FIG. 1.
[FIG. 6] FIG. 6 is a control block diagram of the motorcycle of FIG. 1.
[FIG. 7] FIG. 7(a) is a partial enlarged view of the side view of the motorcycle related to Modification 1 of the present teaching. FIG. 7(b) is a bottom view of FIG. 7(a).
[FIG. 8] FIG. 8(a) is a partial enlarged view of the side view of the motorcycle related to Modification 2 of the present teaching. FIG. 8(b) is a bottom view of FIG. 8(a).
[FIG. 9] FIG. 9 is a schematic diagram of an engine main body and an exhaust system of the motorcycle of Modification 2.
[FIG. 10] FIG. 10 is a partial enlarged view of the side view of the motorcycle related to another embodiment of the present teaching.
[FIG. 11] FIG. 11 is a schematic diagram of an engine main body and an exhaust system of the motorcycle of another embodiment of the present teaching.
[FIG. 12] FIG. 12 is a partial cross-section of an exhaust pipe used in the motorcycle of another embodiment of the present teaching.
[FIG. 13] FIG. 13 is a partial enlarged view of the side view of the motorcycle related to another embodiment of the present teaching.

### [Description of Embodiments]

The following describes an embodiment of the present teaching with reference to figures. Described below is an example in which the present teaching is applied to a motorcycle. Hereinafter, frontward, rearward, leftward, and rightward indicate frontward, rearward, leftward, and rightward of a rider of the motorcycle. In this regard, it is assumed that the motorcycle is provided on a horizontal plane. The signs F, Re, L, and R in the figures indicate frontward, rearward, leftward, and rightward, respectively.

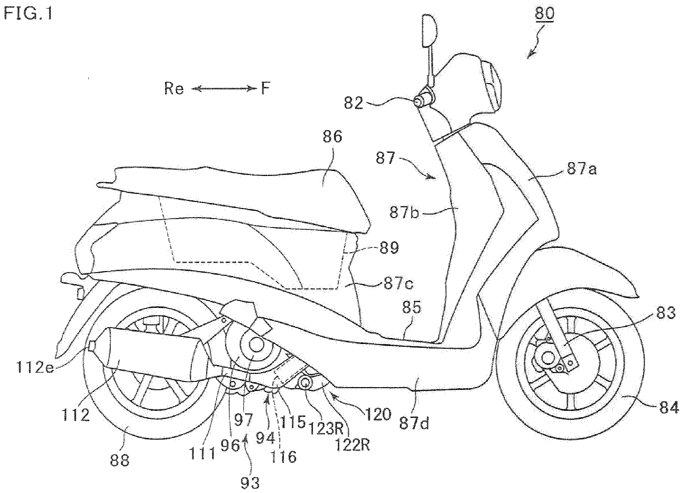

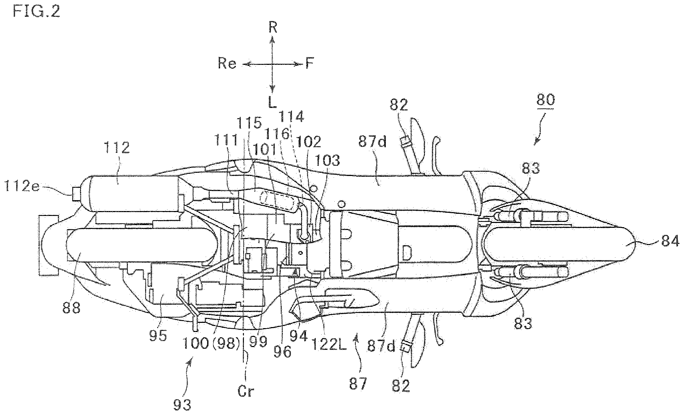

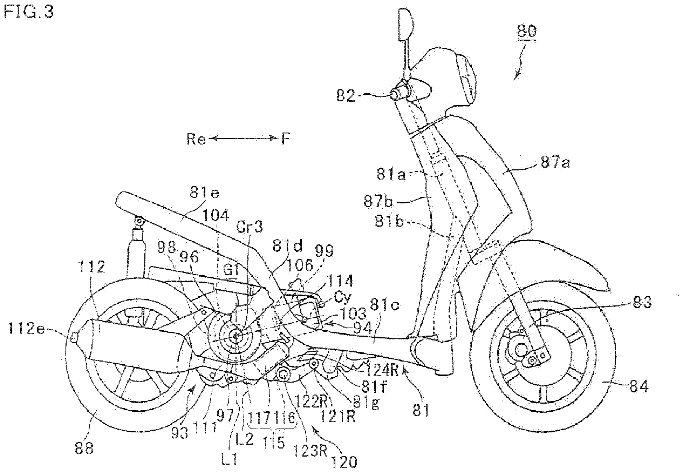

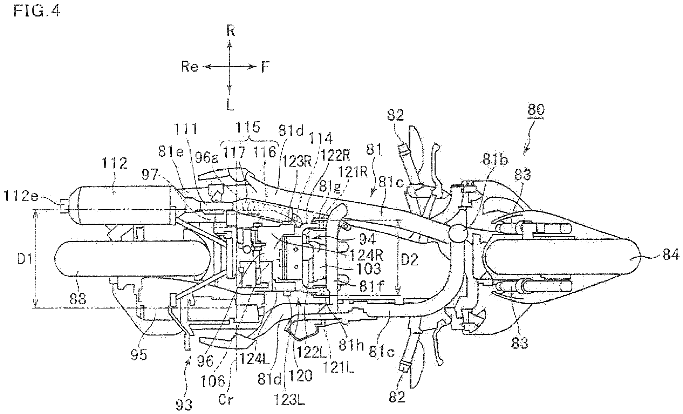

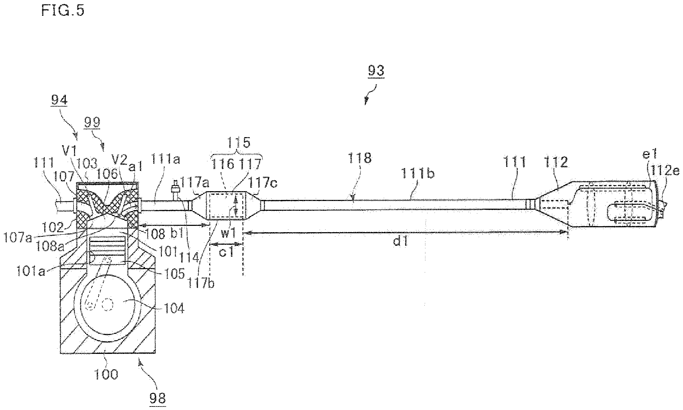

FIG. 1 is a side view of a motorcycle of an embodiment of the present teaching. FIG. 2 is a bottom view of the motorcycle of the embodiment. FIG. 3 is a side view showing a state in which a vehicle body cover, etc. have been removed from the motorcycle of the embodiment. FIG. 4 is a bottom view showing the state in which the vehicle body cover, etc. have been removed from the motorcycle of the embodiment. FIG. 5 is a schematic diagram of an engine and an exhaust system of the motorcycle of the embodiment.

A straddled vehicle of the embodiment is a so-called scooter-type motorcycle 80. As shown in FIG. 3, the motorcycle 80 is provided with a vehicle body frame 81. The vehicle body frame 81 includes a head pipe 81a, a main frame 81b, paired left and right side frames 81c, paired left and right rear frames 81d, paired left and right seat frames 81e, and a crosswise member 81f. The main frame 81b extends rearward and downward from the head pipe 81a. The paired left and right side frames 81c extend substantially horizontally rearward from a lower end portion of the main frame 81b. The paired left and right rear frame 81d extend rearward and upward from lower end portions of the side frames 81c. The paired left and right seat frames 81e extend horizontally rearward from rear end portions of the rear frames 81d. As shown in FIG. 4, the crosswise member 81f is connected to the left and right side frames 81c. The crosswise member 81f extends in the left-right direction.

A steering shaft is rotatably inserted into the head pipe 81a. A handlebar 82 is provided at an upper part of the steering shaft. A display (not illustrated) is provided in the vicinity of the handlebar 82. The display is configured to display vehicle speed, engine rotation speed, warnings, and the like.

Paired left and right front forks 83 are supported at a lower part of the steering shaft. The lower end portions of the front forks 83 support a front wheel 84 in a rotatable manner.

A foot board 85 (see FIG. 1) is attached to the paired left and right side frames 81c (vehicle body frame 81). A rider seated on a subsequently-described seat 86 places his/her feet on this foot board 85. The foot board 85 is provided frontward of the seat 86.

The seat frames 81e support the seat 86 (see FIG. 1). In the vehicle front-rear direction, the seat 86 extends from an intermediate part to a rear end part of the vehicle body frame 81.

A space G1 (see FIG. 3) is provided below the seat 86. A storage box 89 (see FIG. 1) is formed in this space G1. The storage box 89 is an open-top box. The seat 86 functions as a lid for opening and closing the upper opening of the storage box 89. The storage box 89 is provided between the left and right seat frames 81e. The storage box 89 is supported by the rear frames 81d and the seat frames 81e.

As shown in FIG. 1, the motorcycle 80 is provided with a vehicle body cover 87 which covers the vehicle body frame 81 and the like. The vehicle body cover 87 includes a front cover 87a, a leg shield 87b, a main cover 87c, and an under cover 87d. The front cover 87a is provided in front of the head pipe 81a. The leg shield 87b is provided behind the head pipe 81a. The front cover 87a and the leg shield 87b cover the head pipe 81a and the main frame 81b. The main cover 87c extends upward from a rear portion of the foot board 85. The main cover 87c covers the storage box 89 substantially entirely. The vehicle body cover 87 is partially provided below a front portion of the seat 86, below a left portion of the seat 86, and below a right portion of the seat 86. The under cover 87d is provided below the front cover 87a, the leg shield 87b, and the main cover 87c. The under cover 87d covers an upper front part of a subsequently-described engine main body 94 from the front, left, and right.

The vehicle body frame 81 supports a unit-swing-type single-cylinder four-stroke engine unit 93. The single-cylinder four-stroke engine unit 93 includes the engine main body 94 and a power transmission unit 95 (see FIG. 2 and FIG. 4). The power transmission unit 95 is connected to a rear portion of the engine main body 94. The power transmission unit 95 is provided to the left of the engine main body 94. The power transmission unit 95 houses a transmission. The power transmission unit 95 supports a rear wheel 88 in a rotatable manner.

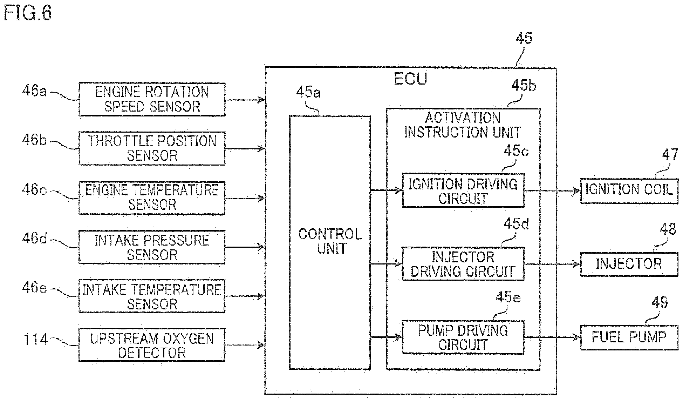

The engine main body 94 is positioned at least partially below a seat 86 (vehicle component). The engine main body 94 is positioned at least partially below a storage box 89 (vehicle component). The engine main body 94 is positioned at least partially below a main cover 87c (vehicle component). The seat 86 and the vehicle body cover 87 cover an upper part of the engine main body 94 from both left and right. A left surface of the engine main body 94 is at least partially covered with at least one vehicle component. A right surface of the engine main body 94 is at least partially covered with at least one vehicle component. Above this engine main body 94, vehicle components below may be provided in addition to the vehicle components described above. Examples of the vehicle components provided above the engine main body 94 include a throttle body (not illustrated), an injector 48 (see FIG. 6), an intake pressure sensor 46d (see FIG. 6), and an intake temperature sensor 46e (see FIG. 6). The throttle body, the injector 48, the intake pressure sensor 46d, and the intake temperature sensor 46e will be described subsequently.

The engine main body 94 is swingably supported by the vehicle body frame 81. The engine main body 94 and the power transmission unit 95 are therefore configured to be integrally swingable with respect to the vehicle body frame 81. The engine main body 94 is swingably supported by the vehicle body frame 81 by means of a swing supporter 120.

As shown in FIG. 4, the swing supporter 120 includes a right link component 122R (link component), a left link component 122L (link component), a right engine supporter 124R (engine supporter), and a left engine supporter 124L (engine supporter). The swing supporter 120 further includes two first pivot shafts 121R and 121L and two second pivot shafts 123R and 123L.

As shown in FIG. 4, a bracket 81g is fixed to a position in the vicinity of a right end portion of the crosswise member 81f. A bracket 81h is fixed to a position in the vicinity of a left end portion of the crosswise member 81f. The brackets 81g and 81h extend rearward from the crosswise member 81f. The right link component 122R is swingably connected to the bracket 81g via the first pivot shaft 121R. The left link component 122L is swingably connected to the bracket 81h via the first pivot shaft 121L. As such, the right link component 122R and the left link component 122L are swingably supported by the vehicle body frame 81. The first pivot shafts 121R and 121L extend in the left-right direction. The first pivot shaft 121R and the first pivot shaft 121L are provided to be coaxial. The right link component 122R and the left link component 122L are formed to be symmetrical in the left-right direction.

The right engine supporter 124R and the left engine supporter 124L constitute a part of the engine main body 94. The right engine supporter 124R is provided at a right end of a lower part of the engine main body 94. The left engine supporter 124L is provided at a left end of the lower part of the engine main body 94. The right engine supporter 124R and the left engine supporter 124L are formed to be substantially symmetrical in the left-right direction. The right engine supporter 124R and the left engine supporter 124L extend frontward. To be more specific, as shown in FIG. 3, the right engine supporter 124R extends frontward and downward. The left engine supporter 124L also extends in the same way. A front end portion of the right engine supporter 124R is connected to the right link component 122R via the second pivot shaft 123R. A front end portion of the left engine supporter 124L is swingably connected to the left link component 122L via the second pivot shaft 123L. As such, the right engine supporter 124R and the left engine supporter 124L are swingably connected to the right link component 122R and the left link component 122L, respectively.

The second pivot shafts 123R and 123L extend in the left-right direction. The second pivot shafts 123R and 123L are provided to be coaxial. The second pivot shafts 123R and 123L are provided rearward of the first pivot shafts 121R and 121L.

As shown in FIG. 3, the swing supporter 120 is provided rearward of the front wheel 84 and frontward of the rear wheel 88. The swing supporter 120 is provided frontward of a subsequently-described crankshaft axis Cr. The crankshaft axis Cr is a linear line in parallel to the left-right direction. It is assumed that the linear line which passes the crankshaft axis Cr and is parallel to the up-down direction is L1. Providing the swing supporter 120 frontward of the crankshaft axis Cr can also be considered as follows. When viewed in the left-right direction, the swing supporter 120 is provided frontward of the linear line L1. The right link component 122R and the left link component 122L are provided frontward of a subsequently-described crankcase member 98. When viewed in the left-right direction, the swing supporter 120 is provided below a subsequently-described cylinder member 99.

As shown in FIG. 2, when viewed from below, the swing supporter 120 is provided rightward of the left end of the vehicle body cover 87. Furthermore, when viewed from below, the swing supporter 120 is provided leftward of the right end of the vehicle body cover 87. It is noted that FIG. 2 does not show some parts such as the right link component 122R and the shroud 96.

As shown in FIG. 4, the maximum width in the left-right direction of the engine main body 94 is referred to as D1. Furthermore, the maximum distance between the right end and the left end of the swing supporter 120 is referred to as D2. The distance D2 is the maximum distance between the right end of the right link component 122R and the left end of the left link component 122L. The maximum distance D2 of the swing supporter 120 is shorter than the maximum width D1 of the engine main body 94.

The single-cylinder four-stroke engine unit 93 includes the engine main body 94, the power transmission unit 95, an air cleaner (not illustrated), an intake pipe 110 (see FIG. 5), an exhaust pipe 111, a silencer 112, a main catalyst 116 (a single-combustion-chamber main catalyst), and an upstream oxygen detector 114.

The engine main body 94 is a single-cylinder four-stroke engine. The engine main body 94 is a forced air-cooled engine. The engine main body 94 includes the shroud 96, a fan 97, a crankcase member 98, and a cylinder member 99 (horizontal cylinder member).

The cylinder member 99 extends frontward from the crankcase member 98. The shroud 96 covers the whole circumference of a rear portion of the cylinder member 99. To be more specific, the shroud 96 covers the whole circumference of the entirety of a subsequently-described cylinder body 101 and the entirety of a later-described cylinder head 102. However, the circumference of the exhaust pipe 111 connected to the cylinder head 102 is not covered. The shroud 96 covers the right part of the crankcase member 98. In FIG. 4, a part of the right surface 96a of the shroud 96 is indicated by dotted lines.

The fan 97 is provided to the right of the crankcase member 98. The fan 97 is provided between the shroud 96 and the crankcase member 98. An inflow port for air intake is formed at a part of the shroud 96 opposing the fan 97. The fan 97 generates an air flow for cooling the engine main body 94. To be more specific, air is introduced or brought into the shroud 96 by the rotation of the fan 97. As this air flow collides with the engine main body 94, the crankcase member 98 and the cylinder member 99 are cooled.

FIG. 4 indicates the fan 97 by dotted lines. The fan 97 is provided rightward of the center in the left-right direction of the motorcycle 80. The center in the left-right direction of the motorcycle 80 indicates the position of a linear line which passes the center in the left-right direction of the front wheel 84 and the center in the left-right direction of the rear wheel 88, when viewed in the up-down direction.

The crankcase member 98 includes a crankcase main body 100 and a crankshaft 104 or the like housed in the crankcase main body 100. The central axis (crankshaft axis) Cr of the crankshaft 104 extends in the left-right direction. The fan 97 is integrally and rotatably connected to a right end portion of the crankshaft 104. The fan 97 is driven by the rotation of the crankshaft 104. Lubricating oil is stored in the crankcase main body 100. The oil is conveyed by an oil pump (not illustrated) and is circulated in the engine main body 94.

The cylinder member 99 includes a cylinder body 101, a cylinder head 102, a head cover 103, and components housed in them. As shown in FIG. 2, the cylinder body 101 is connected to a front portion of the crankcase main body 100. The cylinder head 102 is connected to a front portion of the cylinder body 101. The head cover 103 is connected to a front portion of the cylinder head 102.

As shown in FIG. 5, a cylinder hole 101a is formed in the cylinder body 101. The cylinder hole 101a houses a piston 105 so that the piston 105 is able to reciprocate. The piston 105 is connected to the crankshaft 104 via a connecting rod. Hereinafter, the central axis Cy of the cylinder hole 101a is referred to as a cylinder axis Cy. As shown in FIG. 3, the engine main body 94 is disposed so that the cylinder axis Cy extends in the front-rear direction. To be more specific, the direction in which the cylinder axis Cy extends from the crankcase member 98 to the cylinder member 99 is frontward and upward. The angle of inclination of the cylinder axis Cy with respect to the horizontal direction is 0 degrees or greater and 45 degrees or less.

As shown in FIG. 5, one combustion chamber 106 is formed in the cylinder member 99. The combustion chamber 106 is formed by an inner surface of the cylinder hole 101a of the cylinder body 101, the cylinder head 102, and the piston 105. In other words, a part of the combustion chamber 106 is formed by the inner surface of the cylinder hole 101a. A leading end portion of an ignition plug (not illustrated) is provided in the combustion chamber 106. The ignition plug ignites a gas mixture of fuel and air in the combustion chamber 106. As shown in FIG. 3, the combustion chamber 106 is positioned frontward of the crankshaft axis Cr. In other words, when viewed in the left-right direction, the combustion chamber 106 is positioned in front of the linear line L1. The linear line L1 is a linear line which passes the crankshaft axis Cr and is in parallel to the up-down direction.

As shown in FIG. 5, a cylinder intake passage member 107 and a cylinder exhaust passage member 108 (a single-combustion-chamber cylinder exhaust passage member) are formed in the cylinder head 102. Specifically, the passage member is a structure forming a space (path) through which gas or the like passes. In the cylinder head 102, an intake port 107a and an exhaust port 108a are formed in a wall portion forming the combustion chamber 106. The cylinder intake passage member 107 extends from the intake port 107a to an inlet formed in the outer surface (upper surface) of the cylinder head 102. The cylinder exhaust passage member 108 extends from the exhaust port 108a to an outlet formed in the outer surface (lower surface) of the cylinder head 102. Air passes through the inside of the cylinder intake passage member 107 and is then supplied to the combustion chamber 106. Exhaust gas exhausted from the combustion chamber 106 passes through the cylinder exhaust passage member 108.

An intake valve V1 is provided in the cylinder intake passage member 107. An exhaust valve V2 is provided in the cylinder exhaust passage member 108. The intake valve V1 and the exhaust valve V2 are activated by a valve operating mechanism (not illustrated) which is linked with the crankshaft 104. The intake port 107a is opened and closed by the movement of the intake valve V1. The exhaust port 108a is opened and closed by the movement of the exhaust valve V2. An intake pipe 110 is connected to an end portion (inlet) of the cylinder intake passage member 107. An exhaust pipe 111 is connected to an end portion (outlet) of the cylinder exhaust passage member 108. The path length of the cylinder exhaust passage member 108 is referred to as a1.

As described above, FIG. 2 does not show some parts such as the right link component 122R and the shroud 96. With this arrangement, a connection part of the lower surface of the cylinder head 102 and the exhaust pipe 111 is viewable. As shown in FIG. 2 and FIG. 4, when viewed from below, an upstream end portion of the exhaust pipe 111 is positioned between the right link component 122R and the left link component 122L. However, as shown in FIG. 3, when viewed in the left-right direction, the exhaust pipe 111 passes above the right link component 122R and the left link component 122L. The exhaust pipe 111 therefore does not pass between the right link component 122R and the left link component 122L.

An injector 48 (see FIG. 6) is provided in the cylinder intake passage member 107 or the intake pipe 110. The injector 48 is provided to supply fuel to the combustion chamber 106. To be more specific, the injector 48 injects fuel in the cylinder intake passage member 107 or the intake pipe 110. The injector 48 may be provided to inject fuel in the combustion chamber 106.

A throttle body (not illustrated) is provided in the middle of the intake pipe 110. A throttle valve (not illustrated) is provided in the throttle body. In other words, the throttle valve is provided inside the intake pipe 110.

An upstream end of the intake pipe 110 is connected to an air cleaner (not illustrated). The air cleaner is configured to purify the air supplied to the engine main body 94.

Subsequently, an exhaust system of the single-cylinder four-stroke engine unit 93 will be discussed in detail. In the description of the exhaust system in this specification, the term "upstream" indicates upstream in the direction in which exhaust gas flows. The term "downstream" indicates downstream in the direction in which exhaust gas flows. Furthermore, in the description of the exhaust system in this specification, the term "path direction" indicates the direction in which exhaust gas flows.

As described above, the single-cylinder four-stroke engine unit 93 includes the engine main body 94, the exhaust pipe 111, the silencer 112, the main catalyst 116, and the upstream oxygen detector 114. The silencer 112 is provided with a discharge port 112e which faces the atmosphere. The path from the combustion chamber 106 to the discharge port 112e is referred to as an exhaust path 118 (see FIG. 5). The exhaust path 118 is a space through which exhaust gas passes. The exhaust path 118 is formed by the cylinder exhaust passage member 108, the exhaust pipe 111, and the silencer 112.

As shown in FIG. 5, the upstream end portion of the exhaust pipe 111 is connected to the cylinder exhaust passage member 108. The downstream end portion of the exhaust pipe exhaust pipe 111 is connected to the silencer 112. A catalyst unit 115 is provided in the middle of the exhaust pipe 111. A part of the exhaust pipe 111, which is upstream of the catalyst unit 115, is referred to as an upstream exhaust pipe 111a. A part of the exhaust pipe 111, which is downstream of the catalyst unit 115, is referred to as a downstream exhaust pipe 111b. While FIG. 5 depicts the exhaust pipe 111 as a linear pipe for simplification, the exhaust pipe 111 is not a linear pipe.

As shown in FIG. 2, the exhaust pipe 111 is provided in the right side part of the motorcycle 80. As shown in FIG. 3, a part of the exhaust pipe 111 is provided below the crankshaft axis Cr. The exhaust pipe 111 has two bended portions. The upstream one of the two bended portions is simply referred to as an upstream bended portion. The downstream one of the two bended portions is simply referred to as a downstream bended portion. When viewed in the left-right direction, the upstream bended portion changes the flow direction of the exhaust gas from downward to rearward and downward. When viewed in the left-right direction, the downstream bended portion changes the flow direction of the exhaust gas from downward and rearward to rearward and upward. A part which is downstream of the downstream bended portion is positioned below the crankshaft axis Cr. The downstream end of the main catalyst 116 is provided at the downstream bended portion.

The exhaust gas exhausted from the downstream end of the exhaust pipe 111 flows into the silencer 112. The silencer 112 is connected to the exhaust pipe 111. The silencer 112 is configured to restrain pulsation of the exhaust gas. With this, the silencer 112 restrains the volume of the sound (exhaust sound) generated by the exhaust gas. Multiple expansion chambers and multiple pipes connecting the expansion chambers with one another are provided inside the silencer 112. The downstream end portion of the exhaust pipe exhaust pipe 111 is provided inside an expansion chamber of the silencer 112. The discharge port 112e exposed to the atmosphere is provided at the downstream end of the silencer 112. As shown in FIG. 5, the path length of the exhaust path from the downstream end of the exhaust pipe 111 to the discharge port 112e is referred to as e1. The exhaust gas having passed the silencer 112 is discharged to the atmosphere via the discharge port 112e. As shown in FIG. 3, the discharge port 112e is positioned rearward of the crankshaft axis Cr.

The main catalyst 116 is provided inside the exhaust pipe 111. The catalyst unit 115 includes a hollow cylindrical casing 117 and the main catalyst 116. The upstream end of the casing 117 is connected to the upstream exhaust pipe 111a. The downstream end of the casing 40 is connected to the downstream exhaust pipe 111b. The casing 117 forms a part of the exhaust pipe 111. The main catalyst 116 is fixed to the inside of the casing 117. The exhaust gas is purified when passing through the main catalyst 116. All exhaust gas exhausted from the exhaust port 108a of the combustion chamber 106 passes through the main catalyst 116. The main catalyst 116 purifies the exhaust gas exhausted from the combustion chamber 106 most in the exhaust path 118.

The main catalyst 116 is a so-called three-way catalyst. The three-way catalyst removes three substances in exhaust gas, namely hydrocarbon, carbon monoxide, and nitrogen oxide, by oxidation or reduction. The three-way catalyst is a type of oxidation-reduction catalysts. The main catalyst 116 includes a carrier and catalytic materials attached to the surface of the carrier. This catalyst material purifies the exhaust gas. Examples of the catalyst material noble metals such as platinum, palladium, and rhodium which remove hydrocarbon, carbon monoxide, and nitrogen oxide, respectively.

The main catalyst 116 has a porous structure. The porous structure indicates a structure in which many pores are formed cross-sectionally vertical to the path direction of the exhaust path 118. An example of a porous structure is a honeycomb structure. In the main catalyst 116, pores which are sufficiently narrower than the width of the path in the upstream exhaust pipe 111a are formed.

The main catalyst 116 may be a metal-carrier catalyst or a ceramic-carrier catalyst. The metal-carrier catalyst is a catalyst in which the carrier is made of metal. The ceramic-carrier catalyst is a catalyst in which the carrier is made of ceramic. The carrier of the metal-carrier catalyst is formed, for example, by alternately stacking metal corrugated plates and metal flat plates and winding them. The carrier of the ceramic-carrier catalyst is, for example, a honeycomb structured body.

As shown in FIG. 5, the length of the main catalyst 116 in the path direction is referred to as c1. Furthermore, the maximum width of the main catalyst 116 in the direction vertical to the path direction is referred to as w1. The length c1 of the main catalyst 116 is longer than the maximum width w1 of the main catalyst 116. The cross-sectional shape of the main catalyst 116 in the direction orthogonal to the path direction is, for example, circular. The cross-sectional shape may be arranged such that the length in the up-down direction is longer than the length in the left-right direction.

As shown in FIG. 5, the casing 117 includes a catalyst-provided passage member 117b, an upstream passage member 117a, and a downstream passage member 117c. The main catalyst 116 is provided in the catalyst-provided passage member 117b. In the path direction, the upstream end and the downstream end of the catalyst-provided passage member 117b are respectively at the same positions as the upstream end and the downstream end of the main catalyst 116. The cross-sectional area of the catalyst-provided passage member 117b cut along the direction orthogonal to the path direction is substantially constant. The upstream passage member 117a is connected to the upstream end of the catalyst-provided passage member 117b. The downstream passage member 117c is connected to the upstream end of the catalyst-provided passage member 117b.

The upstream passage member 117a is at least partially tapered. The tapered part increases its inner diameter toward the downstream side. The downstream passage member 117c is at least partially tapered. The tapered part decreases its inner diameter toward the downstream side. The cross-sectional area of the catalyst-provided passage member 117b cut along the direction orthogonal to the path direction is referred to as S. The cross-sectional area of the upstream end of (at least a part of) the upstream passage member 117a cut along the direction orthogonal to the path direction is smaller than the area S. In at least a part of the downstream passage member 117c, the cross-sectional area of the downstream passage member 117c cut along the direction orthogonal to the path direction is smaller than the area S. The at least part of the downstream passage member 117c includes the downstream end of the downstream passage member 117c.

As shown in FIG. 3, when viewed in the left-right direction, the path direction of the main catalyst 116 is tilted with respect to the front-rear direction. The path direction of the main catalyst 116 is the direction from the center of the upstream end of the main catalyst 116 to the center of the downstream end of the main catalyst 116.

As shown in FIG. 4, the main catalyst 116 is provided rightward of the center in the left-right direction of the motorcycle 80. In other words, the main catalyst 116 and the fan 97 are provided on the same side of the center in the left-right direction of the motorcycle 80.

As shown in FIG. 3, the main catalyst 116 is positioned partially to the right of the right end of the swing supporter 120. To be more specific, the main catalyst 116 is positioned partially to the right of the right engine supporter 124R. Due to this, when viewed in the left-right direction, the main catalyst 116 partially overlaps the right engine supporter 124R and the left engine supporter 124L.

As shown in FIG. 4, when viewed from below, the main catalyst 116 is positioned partially on the outer side of the engine main body 94. When viewed from below, the main catalyst 116 partially overlaps the shroud 96. The main catalyst 116 is positioned partially below the shroud 96. In FIG. 4, a part of the right surface 96a of the shroud 96 is indicated by dotted lines. As shown in FIG. 2, when viewed from below, the main catalyst 116 is provided on the outer side of the crankcase member 98 and the cylinder member 99. When viewed from below, the main catalyst 116 does not overlap the crankcase member 98 and the cylinder member 99.

As shown in FIG. 3, the main catalyst 116 is provided frontward of the crankshaft axis Cr. In other words, when viewed in the left-right direction, the main catalyst 116 is provided in front of the linear line L1. As described above, the linear line L1 is a linear line which passes the crankshaft axis Cr and is in parallel to the up-down direction. As a matter of course, the upstream end of the main catalyst 116 is provided frontward of the crankshaft axis Cr. When viewed in the left-right direction, the main catalyst 116 is positioned in front of the cylinder axis Cy.

As shown in FIG. 3, it is assumed that the linear line which is orthogonal to the cylinder axis Cy and orthogonal to the crankshaft axis Cr is L2. When viewed in the left-right direction, the main catalyst 116 is in front of (below) the linear line L2.

As shown in FIG. 5, the path length from the upstream end of the exhaust pipe 111 to the upstream end of the main catalyst 116 is referred to as b1. The path length b1 is a path length of a passage member formed by the upstream exhaust pipe 111a and the upstream passage member 117a of the catalyst unit 115. In other words, the path length b1 is a path length from the downstream end of the cylinder exhaust passage member 108 to the upstream end of the main catalyst 116. Furthermore, the path length from the downstream end of the main catalyst 116 to the downstream end of the exhaust pipe 111 is referred to as d1. The path length d1 is the path length of a passage member formed by the downstream passage member 117c of the catalyst unit 115 and the downstream exhaust pipe 111b. The path length from the combustion chamber 106 to the upstream end of the main catalyst 116 is a1+b1. The path length from the downstream end of the main catalyst 116 to the discharge port 112e is d1+e1.

The main catalyst 116 is provided so that the path length a1+b1 is shorter than the path length d1+e1. Furthermore, the main catalyst 116 is provided so that the path length a1+b1 is shorter than the path length d1. Furthermore, the main catalyst 116 is provided so that the path length b1 is shorter than the path length d1.

The upstream oxygen detector 114 is provided on the exhaust pipe 111. The upstream oxygen detector 114 is provided upstream of the main catalyst 116. The upstream oxygen detector 114 is a sensor configured to detect the oxygen density in the exhaust gas. The upstream oxygen detector 114 may be an oxygen sensor configured to detect whether the oxygen density is higher than a predetermined value or not. Alternatively, the upstream oxygen detector 114 may be a sensor (e.g., an A/F sensor: Air Fuel ratio sensor) configured to output a detection signal representing the oxygen density in steps or linearly. The upstream oxygen detector 114 is arranged such that one end portion (detecting portion) is provided inside the exhaust pipe 111 whereas the other end portion is provided outside the exhaust pipe 111. The detecting portion of the upstream oxygen detector 114 is able to detect the oxygen density when it is heated to a high temperature and activated.

Subsequently, control of the single-cylinder four-stroke engine unit 93 will be described. FIG. 6 is a control block diagram of the motorcycle 80.

As shown in FIG. 6, the single-cylinder four-stroke engine unit 93 includes an engine rotation speed sensor 46a, a throttle position sensor 46b, an engine temperature sensor 46c, an intake pressure sensor 46d, and an intake temperature sensor 46e. The engine rotation speed sensor 46a detects the rotation speed of the crankshaft 104, i.e., the engine rotation speed. The throttle position sensor 46b detects the opening degree of a throttle valve (not illustrated) (hereinafter, throttle opening degree). The engine temperature sensor 46c detects the temperature of the engine main body. The intake pressure sensor 46d detects the pressure (intake pressure) in the intake pipe 110. The intake temperature sensor 46e detects the temperature (intake temperature) in the intake pipe 110.

The single-cylinder four-stroke engine unit 93 includes an electronic control unit (ECU) 45 which is configured to control the engine main body 94. The electronic control unit 45 is connected to sensors such as the engine rotation speed sensor 46a, the engine temperature sensor 46c, the throttle position sensor 46b, the intake pressure sensor 46d, the intake temperature sensor 46e, and a vehicle speed sensor. The electronic control unit 45 is further connected to an ignition coil 47, the injector 48, a fuel pump 49, a display (not illustrated), and the like. The electronic control unit 45 includes a control unit 45a and an activation instruction unit 45b. The activation instruction unit 45b includes an ignition driving circuit 45c, an injector driving circuit 45d, and a pump driving circuit 45e.

Upon receiving a signal from the control unit 45a, the ignition driving circuit 45c, the injector driving circuit 45d, and the pump driving circuit 45e drive the ignition coil 47, the injector 48, and the fuel pump 49, respectively. As the ignition coil 47 is driven, spark discharge occurs at the ignition plug and the mixture gas is ignited. The fuel pump 49 is connected to the injector 48 via a fuel hose. As the fuel pump 49 is driven, fuel in a fuel tank (not illustrated) is pressure-fed to the injector 48.

The control unit 45a is a microcomputer, for example. Based on a signal from the upstream oxygen detector 114, a signal from the engine rotation speed sensor 46a or the like, the control unit 45a controls the ignition driving circuit 45c, the injector driving circuit 45d, and the pump driving circuit 45e. The control unit 45a controls an ignition timing by controlling the ignition driving circuit 45c. The control unit 45a controls a fuel injection amount by controlling the injector driving circuit 45d and the pump driving circuit 45e.

To improve the purification efficiency of the main catalyst 116 and the combustion efficiency, the air-fuel ratio of the air-fuel mixture in the combustion chamber 106 is preferably equivalent to the theoretical air-fuel ratio (stoichiometry). The control unit 45a increases or decreases the fuel injection amount according to need.

The following describes an example of control of the fuel injection amount by the control unit 45a.

To begin with, the control unit 45a calculates a basic fuel injection amount based on signals from the engine rotation speed sensor 46a, the throttle position sensor 46b, the engine temperature sensor 46c, and the intake pressure sensor 46d. To be more specific, an intake air amount is calculated by using a map in which a throttle opening degree and an engine rotation speed are associated with an intake air amount and a map in which an intake pressure and an engine rotation speed are associated with an intake air amount. Based on the intake air amount calculated according to the maps, a basic fuel injection amount with which a target air-fuel ratio is achieved is determined. When the throttle opening degree is small, the map for intake pressure and engine rotation speed associated with intake air amount is used. When the throttle opening degree is great, the map for throttle opening degree and engine rotation speed associated with an intake air amount is used.

In addition to the above, based on a signal from the upstream oxygen detector 114, the control unit 45a calculates a feedback correction value for correcting the basic fuel injection amount. To be more specific, based on a signal from the upstream oxygen detector 114, it is determined whether or not the air-fuel mixture is lean or rich. The term "rich" indicates a state in which fuel is excessive as compared to the theoretical air-fuel ratio. The term "lean" indicates a state in which air is excessive as compared to the theoretical air-fuel ratio. When determining that the air-fuel mixture is lean, the control unit 45a calculates the feedback correction value so that the next fuel injection amount is increased. On the other hand, when determining that the air-fuel mixture is rich, the control unit 45a calculates the feedback correction value so that the next fuel injection amount is decreased.

In addition to the above, the control unit 45a calculates a correction value for correcting the basic fuel injection amount, based on the engine temperature, the outside temperature, the outside atmosphere, or the like. Furthermore, the control unit 45a calculates a correction value in accordance with transient characteristics at acceleration and deceleration.

The control unit 45a calculates the fuel injection amount based on the basic fuel injection amount and the correction values such as the feedback correction value. Based on the fuel injection amount calculated in this way, the fuel pump 49 and the injector 48 are driven. As such, the electronic control unit 45 processes a signal from the upstream oxygen detector 114. Furthermore, the electronic control unit 45 performs combustion control based on a signal from the upstream oxygen detector 114.

The motorcycle 80 of the present embodiment has the following characteristics.

The engine main body 94 is swingably supported by the vehicle body frame 81 by the swing supporter 120. Due to this, the distance between the left end and the right end of the swing supporter 120 is shorter than the maximum width in the left-right direction of the engine main body 94. Available spaces are therefore formed to the left of the left end of the swing supporter 120 and to the right of the right end of the swing supporter 120. The space to the left of the left end of the swing supporter 120 is open to the left. The space to the right of the left end of the swing supporter 120 is open to the right. The main catalyst 116 is positioned at least partially to the right of the right end of the swing supporter 120 or to the left of the left end of the swing supporter 120. The main catalyst 116 is structured such that the length c1 in the flow direction of the exhaust gas is longer than the maximum width w1 in the direction orthogonal to the flow direction of the exhaust gas. Due to this, it is possible to provide the main catalyst 116 to the right of the right end of the swing supporter 120 or to the left of the left end of the swing supporter 120, while avoiding the main catalyst 116 to significantly jut from the engine main body 94 in the left-right direction. As such, it is possible to provide the main catalyst 116 by utilizing the space to the left of the left end of the swing supporter 120 or to the right of the right end of the swing supporter 120. It is therefore possible to allow the heat from the main catalyst 116 to escape in the left-right direction. For this reason, the transfer of the heat upward from the main catalyst 116 is restrained. As a result, the influence of the heat on the vehicle components (e.g., the seat 86 and the vehicle body cover 87) provided above the engine main body 94 is restrained.

Furthermore, when the motorcycle 80 is viewed in the up-down direction, the main catalyst 116 is provided at least partially on the outer side of the engine main body 94. The main catalyst 116 is therefore not entirely provided below the engine main body 94. Due to this, escape of the heat in the horizontal direction from the main catalyst 116 is facilitated. The influence of the heat on the vehicle components provided above the engine main body 94 is therefore further restrained.

As described above, thanks to the position of the main catalyst 116, the influence of the heat on the vehicle components provided above the engine main body 94 is restrained. It is therefore not necessary to provide a heat insulation member between the main catalyst 116 and the vehicle components (e.g., the seat 86 and the vehicle body cover 87), because the heat transfer from the main catalyst 116 to the vehicle components is restrained. When the heat insulation member is provided between the main catalyst 116 and the vehicle components, the vehicle is increased in size in the up-down direction. Because such a heat insulation member is unnecessary in the present embodiment, the increase in size of the motorcycle 80 in the up-down direction is restrained.

When the motorcycle 80 is viewed in the up-down direction, the main catalyst 116 partially overlaps the engine main body 94. Due to this, when viewed in the up-down direction, increase in size of the motorcycle 80 in the horizontal direction is restrained as compared to cases where the entirety of the main catalyst 116 is provided outside the engine main body 94.

The swing supporter 120 further includes two first pivot shafts 121R and 121L and two second pivot shafts 123R and 123L. The first pivot shafts 121R and 121L are separated from each other in the left-right direction. The second pivot shafts 123R and 123L are separated from each other in the left-right direction. The engine main body 94 is supported by the vehicle body frame 81 to be swingable about the two swing axes. For this reason, as compared to cases where the engine main body 94 is supported by the vehicle body frame 81 to be swingable about a single axis, the swing supporter 120 is long. Therefore the available spaces formed to the left of the left end of the swing supporter 120 and to the right of the right end of the swing supporter 120 are long. This increases the degree of freedom in the position of the main catalyst 116. It is therefore possible to provide the main catalyst 116 so that the heat from the main catalyst 116 more easily escapes in the left-right direction. The upward transfer of the heat of the main catalyst 116 is therefore further restrained. As a result, the influence of the heat on the vehicle components (e.g., the seat 86 and the vehicle body cover 87) provided above the engine main body 94 is further restrained.

The main catalyst 116 and the fan 97 are provided on the same side of the center in the left-right direction of the motorcycle 80. Therefore hot air discharged from the main catalyst 116 is sucked by the fan 97 and is discharged outside of the vehicle. The upward transfer of the heat of the main catalyst 116 is therefore further restrained. As a result, the influence of the heat on the vehicle components (e.g., the seat 86 and the vehicle body cover 87) provided above the engine main body 94 is further restrained.

The main catalyst 116 is provided at least partially frontward of the crankshaft axis Cr. A crankshaft 104 of the horizontal cylinder member 99 is positioned at a rear portion of the horizontal cylinder member 99. The swing supporter 120 is provided at a front portion of the engine main body 94. It is therefore easy to provide the main catalyst 116 at a position to the right of the right end of the swing supporter 120.

The main catalyst 116 is provided at least partially in front of the linear line L2. The linear line L2 is a linear line which is orthogonal to the cylinder axis Cy and orthogonal to the crankshaft axis Cr. A crankshaft 104 of the horizontal cylinder member 99 is positioned at a rear portion of the horizontal cylinder member 99. The swing supporter 120 is provided at a front portion of the engine main body 94. It is therefore easy to provide the main catalyst 116 at a position to the right of the right end of the swing supporter 120.

The path length (a1+b1) from one combustion chamber 106 to the upstream end of the main catalyst 116 is shorter than the path length (d1+e1) from the downstream end of the main catalyst 116 to the discharge port 112e. The main catalyst 116 is therefore positioned to be relatively close to the combustion chamber 106. The combustion chamber 106 of the horizontal cylinder member 99 is provided at a front portion of the engine main body 94. The swing supporter 120 is provided at a front portion of the engine main body 94. It is therefore easy to provide the main catalyst 116 at a position to the right of the right end of the swing supporter 120.

The path length (a1+b1) from one combustion chamber 106 to the upstream end of the main catalyst 116 is shorter than the path length (d1) from the downstream end of the main catalyst 116 to the downstream end of the exhaust pipe 111. The main catalyst 116 is therefore positioned to be relatively close to the combustion chamber 106. The combustion chamber 106 of the horizontal cylinder member 99 is provided at a front portion of the engine main body 94. The swing supporter 120 is provided at a front portion of the engine main body 94. It is therefore easy to provide the main catalyst 116 at a position to the right of the right end of the swing supporter 120.

In addition to the above, a cross-sectional area of the catalyst-provided passage member 117b of the casing 117 cut along the direction orthogonal to the flow direction of the exhaust gas is larger than the cross-sectional area of the upstream passage member 117a cut along the direction orthogonal to the flow direction of the exhaust gas in at least a part of the upstream passage member 117a. Furthermore, the cross-sectional area of the catalyst-provided passage member 117b cut along the direction orthogonal to the flow direction of the exhaust gas is larger than the cross-sectional area of the downstream passage member 117c cut along the direction orthogonal to the flow direction of the exhaust gas in at least a part of the downstream passage member 117c. The main catalyst 116 is provided in the catalyst-provided passage member 117b. It is therefore possible to use a catalyst having a large cross-sectional area as the main catalyst 116. The main catalyst 116 is structured such that the length c1 in the flow direction of the exhaust gas is longer than the maximum width w1 in the direction orthogonal to the flow direction of the exhaust gas. The purification capability of purifying the exhaust gas by the main catalyst 116 is therefore high.

### (Modification 1)

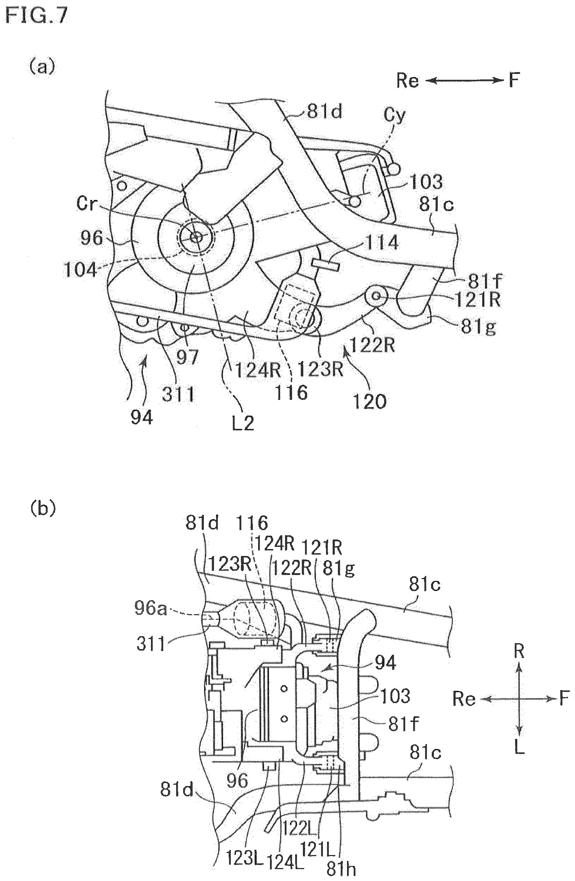

FIG. 7(a) is a partial enlarged view of a side view of a motorcycle of Modification 1. FIG. 7(b) is a partial enlarged view of a bottom view of the motorcycle of Modification 1. In Modification 1, features identical to those in the embodiment above are indicated by the same reference numerals and detailed descriptions thereof are omitted.

In Modification 1, the position of the main catalyst 116 is different from the position in the embodiment above. The main catalyst 116 is provided inside the exhaust pipe 311. As shown in FIG. 7(a), when viewed in the left-right direction, the path direction of the main catalyst 116 is tilted with respect to the front-rear direction. This arrangement is identical to that of the embodiment above.

As shown in FIG. 7(a), the main catalyst 116 is positioned partially to the right of the right engine supporter 124R, the second pivot shaft 123R, and the right link component 122R. The upstream end of the main catalyst 116 of Modification 1 is positioned frontward of the upstream end of the main catalyst 116 of the embodiment above.

As shown in FIG. 7(b), when viewed from below, the main catalyst 116 is positioned partially on the outer side of the engine main body 94. When viewed from below, the main catalyst 116 partially overlaps the shroud 96. In FIG. 7(b), a part of the right surface 96a of the shroud 96 is indicated by dotted lines.

As shown in FIG. 7(a), the main catalyst 116 is provided frontward of the crankshaft axis Cr. When viewed in the left-right direction, the main catalyst 116 is in front of the linear line L2. The definition of the linear line L2 is identical to the definition in the embodiment above. The linear line L2 is a linear line which is orthogonal to the cylinder axis Cy and orthogonal to the crankshaft axis Cr.

The arrangements similar to those in Modification 1 exert effects similar to those described in the embodiment above.

### (Modification 2)

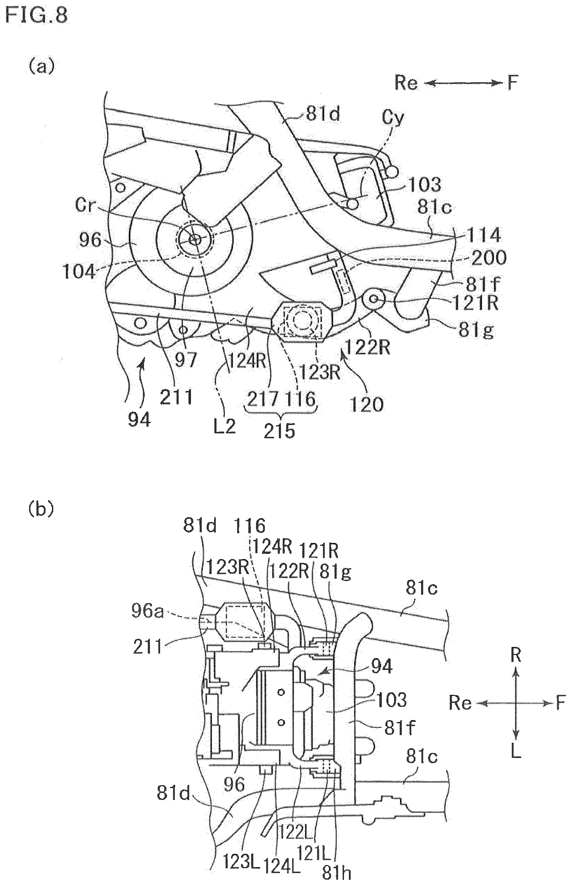

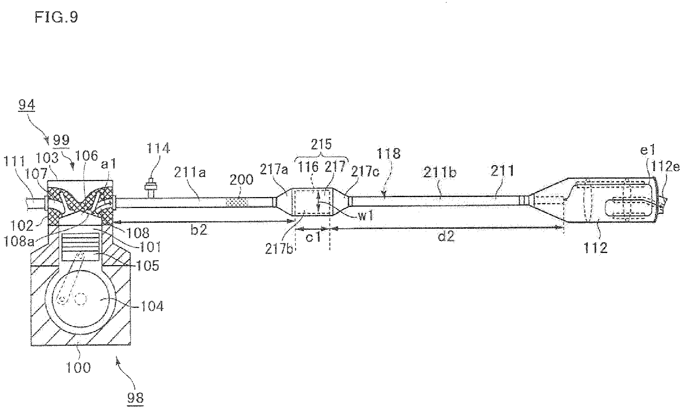

FIG. 8(a) is a partial enlarged view of a side view of a motorcycle of Modification 2. FIG. 8(b) is a partial enlarged view of a bottom view of the motorcycle of Modification 2. FIG. 9 is a schematic diagram of an engine main body and an exhaust system of the motorcycle of Modification 2. In Modification 2, features identical to those in the embodiment above are indicated by the same reference numerals and detailed descriptions thereof are omitted.

As shown in FIG. 8(a) and FIG. 9, an upstream sub-catalyst 200 (a single-combustion-chamber upstream sub-catalyst), the main catalyst 116, and the upstream oxygen detector 114 are provided in an exhaust pipe 211. Being similar to the exhaust pipe 111 of the embodiment above, the exhaust pipe 211 is connected to the cylinder exhaust passage member 108 and the silencer 112. A catalyst unit 215 is provided in the middle of the exhaust pipe 211. The catalyst unit 215 includes the main catalyst 116 and a casing 217. As shown in FIG. 9, a part of the exhaust pipe 211, which is upstream of the catalyst unit 215, is referred to as an upstream exhaust pipe 211a. A part of the exhaust pipe 211, which is downstream of the catalyst unit 215, is referred to as a downstream exhaust pipe 211b. While FIG. 9 depicts the exhaust pipe 211 as a linear pipe for simplification, the exhaust pipe 211 is not a linear pipe.

The upstream sub-catalyst 200 is provided upstream of the main catalyst 116. The upstream sub-catalyst 200 is provided in the upstream exhaust pipe 211a (exhaust pipe 211). The upstream sub-catalyst 200 may be formed solely of catalytic materials attached to an inner wall of the exhaust pipe 211. In such a case, the carrier to which the catalytic materials of the upstream sub-catalyst 200 are attached is the inner wall of the exhaust pipe 211. The upstream sub-catalyst 200 may include a carrier which is provided on the inner side of the exhaust pipe 211. In such a case, the upstream sub-catalyst 200 is formed by the carrier and the catalytic materials. The carrier of the upstream sub-catalyst 200 is, for example, plate-shaped. The plate-shaped carrier may be S-shaped, circular in shape, circular, or C-shaped in cross section in the direction orthogonal to the path direction. Regardless of whether the upstream sub-catalyst 200 includes the carrier or not, the upstream sub-catalyst 200 does not have a porous structure. For this reason, deflection of pressure pulsation of the exhaust gas is not as effectively generated by the upstream sub-catalyst 200 when compared to the main catalyst 116. Furthermore, the upstream sub-catalyst 200 does not greatly resist the flow of the exhaust gas as compared to the main catalyst 39.

The main catalyst 116 purifies the exhaust gas exhausted from the combustion chamber 106 most in the exhaust path 118. In other words, the main catalyst 116 purifies the exhaust gas exhausted from the combustion chamber 106 in the exhaust path 118 more than the upstream sub-catalyst 200. That is, the degree of contribution to the purification of the upstream sub-catalyst 200 of the exhaust gas is lower than that of the main catalyst 116.

The degree of contribution to the purification by the main catalyst 116 and the upstream sub-catalyst 200 may be measured by the following method. In the explanation of the measuring method, among the main catalyst 116 and the upstream sub-catalyst 200, a catalyst provided upstream is termed a front catalyst whereas a catalyst provided downstream is termed a rear catalyst. In Modification 2, the upstream sub-catalyst 200 is the front catalyst whereas the main catalyst 116 is the rear catalyst.

A measurement engine unit A, a measurement engine unit B, and an engine unit of Modification 2 are prepared. The measurement engine unit A is identical to that of Modification 2 except that only the carrier of the rear catalyst is provided in place of the rear catalyst. The measurement engine unit B is identical to that of Modification 2 except that only the carrier of the front catalyst and the base of the rear catalyst are provided in place of the front catalyst and the rear catalyst. In a case where the upstream sub-catalyst 200 is arranged such that catalytic materials are directly attached to the inner wall of the exhaust pipe 211, the exhaust pipe 211 is equivalent to the carrier. Attaching only the carrier of an upstream sub-catalyst 200 instead of attaching the above-described upstream sub-catalyst 200 is equivalent to not attaching catalytic materials to the inner wall of the exhaust pipe 211.

Each engine unit is run, and in a warm-up state, the density of harmful substances in the exhaust gas exhausted from the discharge port 112e is measured. The method of measuring the exhaust gas is in compliance with European regulations.

The measurement engine unit A includes the front catalyst and does not include the rear catalyst. The measurement engine unit B includes neither the front catalyst nor the rear catalyst. Due to this, the degree of contribution to the purification of the front catalyst (upstream sub-catalyst 200) is calculated from a difference between a measurement result of the measurement engine unit A and a measurement result of the measurement engine unit B. Furthermore, the degree of contribution to the purification of the rear catalyst (main catalyst 116) is calculated from a difference between a measurement result of the measurement engine unit A and a measurement result of the engine unit of Modification 2.

The purification capability of the upstream sub-catalyst 200 may be higher than or lower than that of the main catalyst 116. When the purification capability of the upstream sub-catalyst 200 is lower than the purification capability of the main catalyst 116, the purification rate of the exhaust gas when only the upstream sub-catalyst 200 is provided is lower than the purification rate of the exhaust gas when only the main catalyst 116 is provided.

As shown in FIG. 8(a), when viewed in the left-right direction, the path direction of the main catalyst 116 is substantially in parallel with the front-rear direction. The path direction of the main catalyst 116 is the direction from the center of the upstream end of the main catalyst 116 to the center of the downstream end of the main catalyst 116.

As shown in FIG. 8(a), the main catalyst 116 is positioned partially to the right of the right engine supporter 124R, the second pivot shaft 123R, and the right link component 122R. The upstream end of the main catalyst 116 of Modification 2 is positioned frontward of the upstream end of the main catalyst 116 of the embodiment above.

As shown in FIG. 8(b), when viewed from below, the main catalyst 116 is positioned partially on the outer side of the engine main body 94. When viewed from below, the main catalyst 116 partially overlaps the shroud 96. In FIG. 8(b), a part of the right surface 96a of the shroud 96 is indicated by dotted lines.

As shown in FIG. 8(a), the main catalyst 116 is provided frontward of the crankshaft axis Cr. When viewed in the left-right direction, the main catalyst 116 is in front of the linear line L2. The definition of the linear line L2 is identical to the definition in the embodiment above. The linear line L2 is a linear line which is orthogonal to the cylinder axis Cy and orthogonal to the crankshaft axis Cr.

As shown in FIG. 9, the path length from the upstream end of the exhaust pipe 211 to the upstream end of the main catalyst 116 is referred to as b2. The path length from the downstream end of the main catalyst 116 to the downstream end of the exhaust pipe 211 is referred to as d2. The path length from the combustion chamber 106 to the upstream end of the main catalyst 116 is a1+b2. The path length from the downstream end of the main catalyst 116 to the discharge port 112e is d2+e1.

Being similar to the embodiment above, the main catalyst 116 is provided so that the path length a1+b2 is shorter than the path length d2+e1. Furthermore, being similar to the embodiment above, the main catalyst 116 is provided so that the path length a1+b2 is shorter than the path length d2. Furthermore, being similar to the embodiment above, the main catalyst 116 is provided so that the path length b2 is shorter than the path length d2.

The upstream oxygen detector 114 is provided on the exhaust pipe 211. The upstream oxygen detector 114 is provided upstream of the upstream sub-catalyst 200.

The arrangements in Modification 2 exert effects similar to those described in the embodiment above. Furthermore, in Modification 2, the upstream sub-catalyst 200 is provided upstream of the main catalyst 116. Therefore the exhaust gas is purified in the upstream sub-catalyst 200 in addition to the main catalyst 116. The purification performance of purifying the exhaust gas by the catalysts is therefore improved.

Furthermore, the main catalyst 116 and the upstream sub-catalyst 200 are each downsized while the purification performance of purifying the exhaust gas by the catalysts is maintained, as compared to cases where only the main catalyst 116 is provided. Therefore the upstream sub-catalyst 200 is rapidly activated. Due to this, the purification performance of purifying the exhaust gas by the main catalysts is further improved.

Preferred embodiments of the present teaching have been described above. However, the present teaching is not limited to the above-described embodiment, and various changes can be made within the scope of the claims. Further, modifications described below may be used in combination as needed.

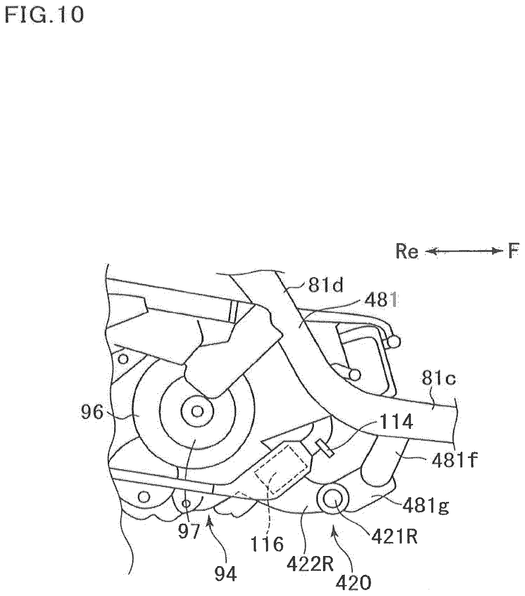

The swing supporter 120 of the embodiment above includes two pivot shafts which are separated from each other when viewed in the left-right direction. The two pivot shafts are, for example, the first pivot shaft 121R and the second pivot shaft 123R. Due to this, the engine main body 94 is swingable about the two shafts with respect to the vehicle body frame 81. Alternatively, for example, as shown in FIG. 10, the engine main body 94 may be swingable about a single shaft with respect to the vehicle body frame 81. The following specifically describes this arrangement shown in FIG. 10.

A swing supporter 420 shown in FIG. 10 includes a right pivot shaft 421R, a left pivot shaft (not illustrated), a right engine supporter 422R, and a left engine supporter (not illustrated). The right engine supporter 422R and the left engine supporter (not illustrated) are formed to be substantially symmetrical in the left-right direction. The right pivot shaft 421R and the left pivot shaft (not illustrated) are provided to be symmetrical in the left-right direction. The right engine supporter 422R and the left engine supporter are parts of the engine main body 94. The right engine supporter 422R is swingably connected to a bracket 481g via the right pivot shaft 421R. The bracket 481g is fixed to a crosswise member 481f of the vehicle body frame 481. The right engine supporter 422R is therefore swingably supported by the vehicle body frame 481. Being similar to the right engine supporter 422R, the left engine supporter is also swingably supported by the vehicle body frame 481. Also engine main body 94 is therefore swingably supported by the vehicle body frame 481 by the swing supporter 420.

In the embodiment above, the swing supporter 120 is provided at a lower portion of the engine main body 94. Alternatively, the swing supporter may be provided at an upper portion of the engine main body.

In the embodiment above, the casing 117 of the catalyst unit 115 and the upstream exhaust pipe 111a are joined with each other after they are independently formed. Alternatively, the casing 117 of the catalyst unit 115 and the upstream exhaust pipe 111a may be integrally formed.

In the embodiment above, the casing 117 of the catalyst unit 115 and the downstream exhaust pipe 111b are joined with each other after they are independently formed. Alternatively, the casing 117 of the catalyst unit 115 and the downstream exhaust pipe 111b may be integrally formed.

The shape of the exhaust pipe 111 in the embodiment above is not limited to the shape shown in FIG. 1 to FIG. 4. Furthermore, the internal structure of the silencer 112 is not limited to the structure indicated by the schematic diagram of FIG. 5.

In the embodiment above, the main catalyst 116 and the silencer 112 are provided rightward of the center in the left-right direction of the motorcycle 80. Alternatively, the main catalyst 116 and the silencer 112 may be provided leftward of the center in the left-right direction of the motorcycle 80. The center in the left-right direction of the motorcycle 80 indicates the position of a linear line which passes the center in the left-right direction of the front wheel 84 and the center in the left-right direction of the rear wheel 88, when viewed in the up-down direction.

In the embodiment above, a part of the exhaust pipe exhaust pipe 111 is provided below the crankshaft axis Cr. Alternatively, the exhaust pipe (the single-combustion-chamber exhaust pipe) may be positioned partially above the crankshaft axis.

In the embodiment above, the main catalyst 116 is a three-way catalyst. The single-combustion-chamber main catalyst of the present teaching, however, may not be a three-way catalyst. The single-combustion-chamber main catalyst may be a catalyst which removes one or two of hydrocarbon, carbon monoxide, and nitrogen oxide. The single-combustion-chamber main catalyst may not be an oxidation-reduction catalyst. The main catalyst may be an oxidation catalyst or a reduction catalyst which removes harmful substances by only oxidation or reduction. An example of the reduction catalyst is a catalyst which removes nitrogen oxide by reduction. This modification may be employed in the upstream sub-catalyst 200.

The single-combustion-chamber main catalyst of the present teaching may comprise multiple catalysts provided to be close to one another. Each catalyst includes a carrier and a catalyst material. The catalysts are close to one another in the sense that the distance between neighboring catalysts is short, rather than the length of each catalyst is short in the path direction. The carrier of the catalysts may be made of one type or multiple types of materials. The noble metal of the catalytic materials of the catalysts may be one type or multiple types of noble metals. This modification may be employed in the upstream sub-catalyst 200.

In Modification 2 of the embodiment above, the upstream sub-catalyst 200 does not have a porous structure. In this connection, the upstream sub-catalyst 200 may have a porous structure.

The position of the main catalyst 116 is not limited to those described in the embodiment and Modifications 1 and 2 above. The following describes specific modifications of the position of the main catalyst.

In the embodiment above, the main catalyst 116 is positioned at least partially to the right of the right end of the swing supporter 120. Alternatively, the main catalyst 116 may be positioned at least partially to the left of the left end of the swing supporter 120.

In the embodiment above, the main catalyst 116 is positioned partially below the shroud 96. In other words, a part of the main catalyst 116 is provided below a part of the engine main body 94. Alternatively, a part of the main catalyst 116 may be provided above a part of the engine main body 94.

In the embodiment above, when viewed in the up-down direction, the main catalyst 116 is positioned partially on the outer side of the engine main body 94. Alternatively, when viewed in the up-down direction, the entirety of the main catalyst 116 may be provided on the outer side of the engine main body 94.

In the embodiment and Modifications 1 and 2 above, the entirety of the main catalyst 116 is provided frontward of the crankshaft axis Cr. The main catalyst 116, however, may be positioned at least partially frontward of the crankshaft axis crankshaft axis Cr. Alternatively, the main catalyst may be positioned at least partially rearward of the crankshaft axis Cr.

The entirety of the main catalyst 116 of the embodiment and Modifications 1 and 2 above is, when viewed in the left-right direction, provided in front of the linear line L2. Alternatively, the main catalyst 116 may be provided at least partially in front of the linear line L2 when viewed in the left-right direction. Alternatively, the main catalyst 116 may be provided at least partially behind the linear line L2 when viewed in the left-right direction.

The main catalyst 116 of the embodiment above is provided so that the path length a1+b1 is shorter than the path length d1+e1. Alternatively, the main catalyst 116 may be provided so that the path length a1+b1 is longer than the path length d1+e1. The path length a1+b1 is the path length from the combustion chamber 106 to the upstream end of the main catalyst 116. The path length d1+e1 is the path length from the downstream end of the main catalyst 116 to the discharge port 112e. This modification may be employed in Modifications 1 and 2 above.

The main catalyst 116 of the embodiment above is provided so that the path length a1+b1 is shorter than the path length d1. Alternatively, the main catalyst 116 may be provided so that the path length a1+b1 is longer than the path length d1. The path length a1+b1 is the path length from the combustion chamber 106 to the upstream end of the main catalyst 116. The path length d1 is the path length from the downstream end of the main catalyst 116 to the downstream end of the exhaust pipe 111. This modification may be employed in Modifications 1 and 2 above.

The main catalyst 116 of the embodiment above is provided so that the path length b1 is shorter than the path length d1. Alternatively, the main catalyst 116 may be provided so that the path length b1 is longer than the path length d1. The path length b1 is the path length from the upstream end of the exhaust pipe 111 to the upstream end of the main catalyst 116. The path length d1 is the path length from the downstream end of the main catalyst 116 to the downstream end of the exhaust pipe 111. This modification may be employed in Modifications 1 and 2 above.

The upstream sub-catalyst 200 in Modification 2 above is provided upstream of the main catalyst 116. To be more specific, the upstream sub-catalyst 200 is provided in the upstream exhaust pipe 111a. The upstream sub-catalyst (the single-combustion-chamber upstream sub-catalyst) provided upstream of the main catalyst 116, however, may not be provided on the upstream exhaust pipe 111a. The upstream sub-catalyst may be provided on the cylinder exhaust passage member 108. Alternatively, the upstream sub-catalyst may be provided on the upstream passage member 117a of the catalyst unit 115.

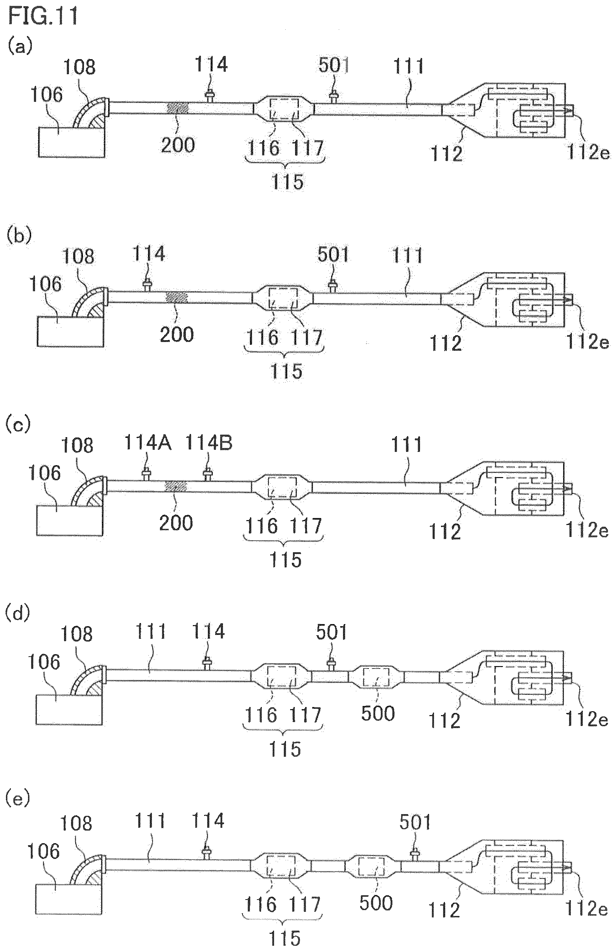

A downstream sub-catalyst (a single-combustion-chamber downstream sub-catalyst) may be provided downstream of the main catalyst. The downstream sub-catalyst may be identical in structure with the upstream sub-catalyst 200 of Modification 2 of the embodiment above. The downstream sub-catalyst may have a porous structure. For example, as shown in FIG. 11(d) and FIG. 11(e), a downstream sub-catalyst 500 may be provided on the exhaust pipe 111. The downstream sub-catalyst may be provided inside the silencer 112. The downstream sub-catalyst may be provided downstream of the downstream end of the exhaust pipe 111. When the downstream sub-catalyst is provided, the upstream sub-catalyst 200 may be provided upstream of the main catalyst.

As the downstream sub-catalyst is provided downstream of the main catalyst 116, the following effects are achieved. The exhaust gas is purified not only in the main catalyst 116 but also in the downstream sub-catalyst. The purification performance of purifying the exhaust gas by the catalysts is therefore improved. Furthermore, the main catalyst 116 and the downstream sub-catalyst are each downsized while the purification performance of purifying the exhaust gas by the catalysts is maintained, as compared to cases where only the main catalyst 116 is provided. Therefore the main catalyst 116 is rapidly activated. The purification performance of purifying the exhaust gas by the catalysts is therefore further improved.

When the downstream sub-catalyst is provided downstream of the main catalyst, the main catalyst purifies the exhaust gas exhausted from the combustion chamber most in the exhaust path. The degree of contribution to the purification by the main catalyst and the downstream sub-catalyst can be measured by the measuring method recited in Modification 2. The front catalyst in the method recited in Modification 2 is deemed to be a main catalyst, whereas the rear catalyst is deemed to be a downstream sub-catalyst.

When the downstream sub-catalyst is provided downstream of the main catalyst, the purification capability of the downstream sub-catalyst may be higher than or lower than the purification capability of the main catalyst. In other words, the purification rate of the exhaust gas when only the downstream sub-catalyst is provided may be higher than or lower than the purification rate of the exhaust gas when only the main catalyst is provided.

When the downstream sub-catalyst is provided downstream of the main catalyst, the main catalyst rapidly deteriorates when compared to the downstream sub-catalyst. For this reason, even if the degree of contribution to the purification of the main catalyst is at first higher than that of the downstream sub-catalyst, the degree of contribution to the purification of the downstream sub-catalyst may become higher than that of the main catalyst when the accumulative mileage becomes great. The single-combustion-chamber main catalyst of the present teaching purifies the exhaust gas exhausted from the combustion chamber most in the exhaust path. This holds true before the reversal above occurs. In other words, the arrangement holds true before the accumulative mileage reaches a predetermined distance (e.g., 1000km).

In the present teaching, the number of catalysts provided in the single-cylinder four-stroke engine unit may be one or many. When multiple catalysts are provided, a catalyst which purifies the exhaust gas exhausted from the combustion chamber most in the exhaust path is equivalent to the single-combustion-chamber main catalyst of the present teaching. When the number of catalysts is one, that catalyst is the single-combustion-chamber main catalyst of the present teaching. An upstream sub-catalyst and a downstream sub-catalyst may be provided upstream and downstream of the main catalyst. Two or more upstream sub-catalysts may be provided upstream of the main catalyst. Two or more downstream sub-catalysts may be provided downstream of the main catalyst.

The position of the upstream oxygen detector 114 is not limited to those described in the embodiment and Modifications 1 and 2 above. The upstream oxygen detector 114 is provided upstream of the main catalyst 116. The following describes specific modifications of the position of the upstream oxygen detector 114.

In the embodiment above, the upstream oxygen detector 114 is provided on the exhaust pipe 111. Alternatively, the upstream oxygen detector may be provided on the cylinder exhaust passage member 108 of the cylinder member 99.

The upstream oxygen detector 114 of Modification 2 is provided upstream of the upstream sub-catalyst 200 in the same manner as in FIG. 11(b). However, when the upstream sub-catalyst 200 is provided upstream of the main catalyst 116, the position of the upstream oxygen detector 114 may be arranged as below. For example, as shown in FIG. 11(a), the upstream oxygen detector 114 may be provided downstream of the upstream sub-catalyst 200. Furthermore, for example, as shown in FIG. 11(c), upstream oxygen detectors 114A and 114B may be provided upstream and downstream of the upstream sub-catalyst 200, respectively. The upstream oxygen detector 114A is provided upstream of the upstream sub-catalyst 200. The upstream oxygen detector 114B is provided downstream of the upstream sub-catalyst 200 and upstream of the main catalyst 116.

In the embodiment and Modifications 1 and 2 above, the number of the upstream oxygen detector 114 provided upstream of the main catalyst 116 is one. In this regard, the number of the upstream oxygen detectors provided upstream of the main catalyst 116 may be two or more.

Downstream of the main catalyst 116, at least one downstream oxygen detector may be provided. The specific structure of the downstream oxygen detector is identical to that of the upstream oxygen detector 114. For example, as shown in FIG. 11(a), FIG. 11(b), FIG. 11(d), and FIG. 11(e), a downstream oxygen detector 501 may be provided on the exhaust pipe 111. Alternatively, the downstream oxygen detector may be provided on the silencer 112. The downstream oxygen detector may be provided so that the detection target is exhaust gas downstream of the downstream end of the exhaust pipe 111. When the main catalyst is provided on the cylinder exhaust passage member, the downstream oxygen detector may be provided on the cylinder exhaust passage member.

When a downstream sub-catalyst 500 is provided downstream of the main catalyst 116, the position of the downstream oxygen detector 501 may be one of the following two positions. For example, as shown in FIG. 11(d), the downstream oxygen detector 501 is provided downstream of the main catalyst 116 and upstream of the downstream sub-catalyst 500. Alternatively, for example, as shown in FIG. 11(e), the downstream oxygen detector 501 is provided downstream of the downstream sub-catalyst 500. Alternatively, the downstream oxygen detectors may be provided upstream and downstream of the downstream sub-catalyst 500, respectively.

When the downstream oxygen detector is provided downstream of the main catalyst, an electronic control unit processes a signal from the downstream oxygen detector. The electronic control unit may determine the purification capability of the main catalyst based on a signal from the downstream oxygen detector. Alternatively, the electronic control unit may determine the purification capability of the main catalyst based on a signal from the upstream oxygen detector and a signal from the downstream oxygen detector. The electronic control unit may perform combustion control based on a signal from the upstream oxygen detector and a signal from the downstream oxygen detector.

The following describes an example of how the purification capability of the main catalyst is specifically determined based on a signal from the downstream oxygen detector. To begin with, a fuel injection amount is controlled so that the gas mixture repeatedly and alternately changes between rich and lean. Then the delay of a change in a signal from the downstream oxygen detector due to a change in the fuel injection amount is detected. When the change in the signal from the downstream oxygen detector is significantly delayed, it is determined that the purification capability of the main catalyst is lower than a predetermined level. In this case, a signal is sent from the electronic control unit to the display. A warning lamp (not illustrated) of the display is turned on. This prompts the rider to replace the main catalyst.

As such, the deterioration of the main catalyst is detectable by means of a signal from the downstream oxygen detector provided downstream of the main catalyst. This makes it possible to suggest the replacement of the main catalyst by providing information before the deterioration of the main catalyst reaches a predetermined level. The initial performance of the straddled vehicle in connection with the exhaust gas purification is therefore maintained for a long time.

The following describes an example of how the purification capability of the main catalyst is specifically determined based on a signal from the upstream oxygen detector and a signal from the downstream oxygen detector. For example, the purification capability of the main catalyst may be determined by comparing a change in a signal from the upstream oxygen detector with a change in a signal from the downstream oxygen detector. The degree of deterioration of the main catalyst is more precisely detectable when signals from two oxygen detectors upstream and downstream of the main catalyst, respectively, are used. It is therefore possible to suggest the replacement of the single-combustion-chamber main catalyst at a more suitable time as compared to cases where the deterioration of the main catalyst is determined based solely on a signal from the downstream oxygen detector. One main catalyst can therefore be used for a longer time while the initial performance of the vehicle in connection with the exhaust gas purification is maintained.

The following describes an example of how combustion control is specifically carried out based on a signal from the upstream oxygen detector and a signal from the downstream oxygen detector. To begin with, in a manner similar to the embodiment above, a basic fuel injection amount is corrected based on a signal from the upstream oxygen detector 114 and fuel is injected from the injector 48. The exhaust gas generated due to the combustion of the fuel is detected by the downstream oxygen detector. The fuel injection amount is then corrected based on a signal from the downstream oxygen detector. In this way, a deviation of the air-fuel ratio of the gas mixture from a target air-fuel ratio is further restrained.

The actual state of purification by the main catalyst is understood by using signals from two oxygen detectors provided upstream and downstream of the main catalyst. Due to this, the precision of the fuel control is improved when the fuel control is carried out based on signals from two oxygen detectors. For this reason, the progress of the deterioration of the main catalyst can be restrained. The initial performance of the straddled vehicle in connection with the exhaust gas purification can therefore be maintained for a longer time.

In the embodiment above, the ignition timing, the fuel injection timing, the fuel injection amount are controlled based on a signal from the upstream oxygen detector 114. However, the control process based on a signal from the upstream oxygen detector 114 is not particularly limited, and may be carried out for only one of the ignition timing and the fuel injection amount. Furthermore, the control process based on a signal from the upstream oxygen detector 114 may include a control process other than that mentioned above.

The upstream oxygen detector 114 may include a heater. The detecting portion of the upstream oxygen detector 114 is able to detect the oxygen density when it is heated to a high temperature and activated. Due to this, when the upstream oxygen detector 114 includes the heater, the detection portion is able to detect oxygen more rapidly as the heater heats the detecting portion at the same time as the start of the engine running. When the downstream oxygen detector is provided downstream of the main catalyst, the modification may be employed in the downstream oxygen detector.

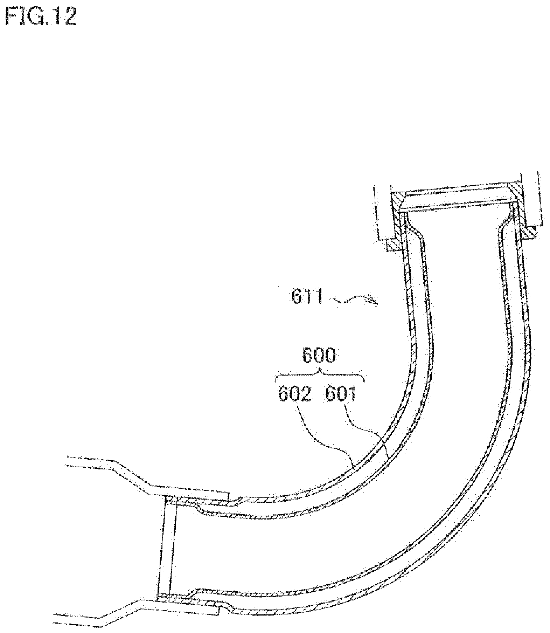

At least a part of the exhaust pipe 111, which is upstream of the main catalyst 116, may be formed of a multi-walled pipe. The multi-walled pipe includes an inner pipe and at least one outer pipe which covers the inner pipe. When there are multiple outer pipes, the outer pipes are overlapped in the thickness direction. FIG. 12 shows an example in which at least a part of an exhaust pipe 611, which is upstream of the main catalyst, is formed of a double-walled pipe 600. The double-walled pipe 600 includes an inner pipe 601 and an outer pipe 602 covering the inner pipe. In FIG. 12, the inner pipe 601 and the outer pipe 602 are in contact with each other only at end portions. The inner pipe and the outer pipe of the multi-walled pipe may be in contact with each other at a portion other than the end portions. For example, the inner pipe and the outer pipe may be in contact with each other at a bended portion. The contact area is preferably smaller than the non-contact area. The inner pipe and the outer pipe may be entirely in contact with each other.

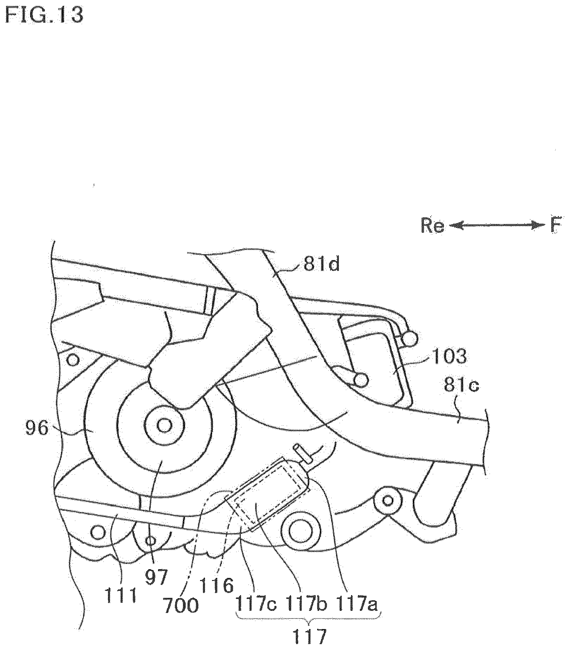

For example, as shown in FIG. 13, at least a part of the outer surface of the catalyst-provided passage member 117b may be covered with a catalyst protector 700. The catalyst protector 700 is formed to be substantially cylindrical in shape. This arrangement restrains heat radiation from the main catalyst 116 outside by the catalyst protector 700. The upward transfer of the heat of the main catalyst 116 is therefore further restrained. The influence of the heat on the vehicle components provided above the engine main body 94 is therefore further restrained.

In the embodiment above, the gas flowing in the exhaust path 118 during engine running is only the exhaust gas exhausted from the combustion chamber 106. In this regard, the single-cylinder four-stroke engine unit of the present teaching may include a secondary air supply mechanism which is configured to supply air to the exhaust path. A known arrangement is employed for the specific arrangement of the secondary air supply mechanism. The secondary air supply mechanism may forcibly supply air to the exhaust path by means of an air pump. Furthermore, the secondary air supply mechanism may bring air to the exhaust path by means of a negative pressure in the exhaust path. In this case, the secondary air supply mechanism includes a reed valve which opens and closes in accordance with pressure pulsation of the exhaust gas. When the secondary air supply mechanism is included, the upstream oxygen detector may be provided upstream or downstream of a position of air inflow.

In the embodiment above, the injector 48 is provided to supply fuel to the combustion chamber 106. A fuel supplier for supplying fuel to the combustion chamber is not limited to the injector. For example, a fuel supplier configured to supply fuel to the combustion chamber by a negative pressure may be provided.

In the embodiment above, only one exhaust port 108a is provided for one combustion chamber 106. Alternatively, multiple exhaust ports may be provided for one combustion chamber. For example, this modification applies to cases where a variable valve mechanism is included. The exhaust paths extending from the respective exhaust ports are gathered at a location upstream of the main catalyst. The exhaust paths extending from the respective exhaust ports are preferably gathered at the cylinder member.

The combustion chamber of the present teaching may include a main combustion chamber and an auxiliary combustion chamber connected to the main combustion chamber. In this case, one combustion chamber is formed by the main combustion chamber and the auxiliary combustion chamber.

In the embodiment above, the crankcase main body 100 and the cylinder body 101 are different members. Alternatively, the crankcase main body and the cylinder body may be integrally formed. In the embodiment above, the cylinder body 101, the cylinder head 102, and the head cover 103 are different members. Alternatively, two or three of the cylinder body, the cylinder head, and the head cover may be integrally formed.

In the embodiment above, the fan 97 is provided rightward of the center in the left-right direction of the motorcycle 80. Alternatively, the fan 97 may be provided leftward of the center in the left-right direction of the motorcycle 80. In this case, the main catalyst 116 is preferably provided leftward of the center in the left-right direction of the motorcycle 80. Therefore, in the same manner as in the embodiment above, hot air discharged from the main catalyst 116 is sucked by the fan 97 and is discharged outside of the vehicle. Alternatively, the fan 97 and the main catalyst 116 may be provided on the both sides of the center in the left-right direction of the motorcycle 80.

The single-cylinder four-stroke engine unit of the embodiment above is a forced air-cooled type. The single-cylinder four-stroke engine unit of the present teaching may be a natural air-cooled type. The single-cylinder four-stroke engine unit of the natural air-cooled type is not provided with a fan. The single-cylinder four-stroke engine unit of the present teaching may be a water-cooled type. The single-cylinder four-stroke engine unit of a water-cooled type is provided with a radiator and a fan. Coolant flowing in the radiator is cooled by an air flow generated by the fan. The engine main body is cooled by the cooled coolant. As such, the fan provided in the water-cooled single-cylinder four-stroke engine unit generates an air flow for cooling the engine main body. The fan is provided leftward or rightward of the center in the left-right direction of the motorcycle. The main catalyst and the fan are preferably provided on the same side of the center in the left-right direction of the motorcycle. Alternatively, the fan and the main catalyst may be provided on both sides of the center in the left-right direction of the motorcycle.

In the embodiment above, the motorcycle is exemplified as the straddled vehicle including the single-cylinder four-stroke engine unit. The straddled vehicle of the present teaching, however, may be any type of straddled vehicle on condition that the straddled vehicle is moved by the power of a single-cylinder four-stroke engine unit. The straddled vehicle of the present teaching may be a straddled vehicle which is not a motorcycle. The straddled vehicle indicates all types of vehicles on which a rider rides in a manner of straddling a saddle. The straddled vehicle includes motorcycles, tricycles, four-wheeled buggies (ATVs: All Terrain Vehicles), personal water crafts, snowmobiles, and the like.

The single-cylinder four-stroke engine unit 93 of the embodiment above is of a unit-swing type. The engine main body 94 is arranged to be swingable with respect to the vehicle body frame 81. Due to this, the position of the crankshaft axis Cr with respect to the main catalyst 116 changes in accordance with the running state. In this specification and the present teaching, the expression "the main catalyst is positioned in front of the crankshaft axis" indicates that the main catalyst is positioned in front of the crankshaft axis when the engine main body is at a position within a movable range. The positional relations other than this are also realized within the movable range of the engine main body.

In this specification and the present teaching, the upstream end of the main catalyst is an end of the main catalyst, at which the path length from the combustion chamber is the shortest. The downstream end of the main catalyst indicates an end of the main catalyst, at which the path length from the combustion chamber is the longest. The upstream ends and the downstream ends of elements other than the main catalyst are similarly defined, too.

In this specification and the present teaching, a passage member indicates walls and the like which form a path by surrounding the path. A path indicates a space through which a target passes. The exhaust passage member indicates walls or the like which form the exhaust path by surrounding the exhaust path. The exhaust path indicates a space through which exhaust gas passes.

In this specification and the present teaching, the path length of the exhaust path indicates the path length of the center of the exhaust path. The path length of the expansion chamber in the silencer indicates the length of the path which connects the center of the inflow port of the expansion chamber with the center of the outflow port of the expansion chamber in the shortest distance.

In this specification, the path direction indicates the direction of the path which passes the center of the exhaust path and the direction in which the exhaust gas flows.

This specification uses an expression "the cross-sectional area of the passage member cut along the direction orthogonal to the path direction". Furthermore, the specification and the present teaching use an expression "the cross-sectional area of the passage member cut along the direction orthogonal to the flow direction of the exhaust gas". The cross-sectional area of the passage member may be the area of the inner circumferential surface of the passage member or the area of the outer circumferential surface of the passage member.

In this specification and the present teaching, expressions that a member or a linear line extends in a direction A and a direction along the direction A are not limited to cases where the member or the linear line is parallel to the direction A. The expression that a member or a linear line extends in a direction A includes cases where the member or the linear line intersects with the direction A at an angle which falls within the range from -45 degrees to 45 degrees, and the expression that a direction is along a direction A includes cases where the direction intersects with the direction A at an angle which falls within the range from -45 degrees to 45 degrees. The direction A does not indicate any specific direction. The direction A may be the horizontal direction or the front-rear direction.

The crankcase main body 100 of this specification is equivalent to the crankcase member 95 of the specification of the basic application of the subject application. The cylinder body 101 of this specification is equivalent to the cylinder member 96 of the specification of the basic application of the subject application. The engine main body 94 of this specification is equivalent to the engine 93 of the specification of the basic application above.

The present teaching includes any and all embodiments including equivalent elements, modifications, omissions, combinations (e.g., of features across various embodiments), adaptations and/or alterations which can be appreciated by those in the art on the basis of the present disclosure. The limitations in the claims are to be interpreted broadly on the basis of the language used in the claims. The limitations in the claims are not limited to the embodiments described herein or during the prosecution of the application. Such embodiments are to be construed as non-exclusive. For example, the term "preferably" or "preferable" herein is non-exclusive and means "preferably/preferable, but not limited to."

### [Reference Signs List]

80 motorcycle (straddled vehicle)
81, 481 vehicle body frame
81f, 481f crosswise member
81g, 81h, 481g bracket
85 foot board
86 seat (vehicle component)
87 vehicle body cover (vehicle component)
89 storage box (vehicle component)
93 single-cylinder four-stroke engine unit
94, engine main body
97 fan
98 crankcase member
99 cylinder member (horizontal cylinder member)
101a cylinder hole
104 crankshaft
105 piston
106 combustion chamber
108 cylinder exhaust passage member (single-combustion-chamber cylinder exhaust passage member)
111, 211, 311, 611 exhaust pipe (single-combustion-chamber exhaust pipe)
112 silencer (single-combustion-chamber silencer)
112e discharge port
114, 114A, 114B upstream oxygen detector
115, 215 catalyst unit
116 main catalyst (single-combustion-chamber main catalyst)
117a upstream passage member
117b catalyst-provided passage member
117c downstream passage member
118 exhaust path
120 swing supporter
121R, 121L first pivot shaft
122R right link component (link component)
122L left link component (link component)
123R, 123L second pivot shaft
124R right engine supporter (engine supporter)
124L left engine supporter (engine supporter)
200 upstream sub-catalyst (single-combustion-chamber upstream sub-catalyst)
420 swing supporter
421R right pivot shaft
422R right engine supporter
500 downstream sub-catalyst (single-combustion-chamber downstream sub-catalyst)
501 downstream oxygen detector
600 double-walled pipe
601 inner pipe
602 outer pipe
700 catalyst protector
Cr crankshaft axis (central axis of crankshaft)
Cy cylinder axis (central axis of cylinder hole)
L2 linear line orthogonal to crankshaft axis and cylinder axis

## Claims

1. A straddled vehicle (80) comprising: a single-cylinder four-stroke engine unit (93);
a vehicle body frame (81) supporting the single-cylinder four-stroke engine unit; and at least one vehicle component (86, 87) which is provided at least partially above the single-cylinder four-stroke engine unit,
the single-cylinder four-stroke engine unit (93) including:
an engine main body (94) including a horizontal cylinder member (99) in which one combustion chamber (106) which is partially formed by an inner surface of a cylinder hole (101a) and a single-combustion-chamber cylinder exhaust passage member (108) in which exhaust gas exhausted from the one combustion chamber (106) flows are formed, the horizontal cylinder member (99) being provided so that a central axis of the cylinder hole (Cy) extends in a front-rear direction of the straddled vehicle (80), the engine main body (94) being swingably supported by the vehicle body frame (81) by a swing supporter (120), and the engine main body (94) being provided below the at least one vehicle component;
a single-combustion-chamber exhaust pipe (111) connected to a downstream end of the single-combustion-chamber cylinder exhaust passage member (108) of the engine main body (94);
a single-combustion-chamber silencer (112) including a discharge port (112e) exposed to the atmosphere, the silencer (112) being connected to the single-combustion-chamber exhaust pipe (111) to allow the exhaust gas to flow from a downstream end of the single-combustion-chamber exhaust pipe to the discharge port, and the silencer (112) being configured to reduce sound generated by the exhaust gas; and
a single-combustion-chamber main catalyst (116) provided in the single-combustion-chamber exhaust pipe (111), the length of the single-combustion-chamber main catalyst (116) in a flow direction of the exhaust gas being longer than the maximum width of the single-combustion-chamber main catalyst in a direction orthogonal to the flow direction, the single-combustion-chamber main catalyst (116) being provided at least partially to the right of a right end of the swing supporter (120) or the left of a left end of the swing supporter in a left-right direction of the straddled vehicle, the single-combustion-chamber main catalyst (116) being at least partially provided on the outer side of the engine main body (94) when the straddled vehicle is viewed in an up-down direction, and the single-combustion-chamber main catalyst (116) purifying the exhaust gas exhausted from the one combustion chamber most in an exhaust path from the one combustion chamber (106) to the discharge port (112e).

2. The straddled vehicle (80) according to claim 1, wherein, the swing supporter (120) includes:
a link component (122R, 122L) swingably supported by the vehicle body frame (81); and
an engine supporter (124R, 124L) constituting a part of the engine main body (94) and connected to the link component to be swingable.

3. The straddled vehicle (80) according to claim 1 or 2, wherein, the single-cylinder four-stroke engine unit (93) includes
a fan (97) which is provided leftward or rightward of the center in the left-right direction of the straddled vehicle (80) and is configured to generate an air flow for cooling the engine main body (94), and
the single-combustion-chamber main catalyst (116) and the fan (97) are provided on the same side of the center in the left-right direction of the straddled vehicle.

4. The straddled vehicle (80) according to any one of claims 1 to 3, wherein, the engine main body (94) includes a crankcase member (98) including a crankshaft (104) which extends in a left-right direction of the straddled vehicle, and
the single-combustion-chamber main catalyst (116) is provided at least partially frontward of the central axis of the crankshaft (Cr) in the front-rear direction of the straddled vehicle.

5. The straddled vehicle (80) according to any one of claims 1 to 4, wherein, the engine main body (94) includes a crankcase member (98) including a crankshaft (104) which extends in a left-right direction of the straddled vehicle, and
when the straddled vehicle is viewed in the left-right direction, the single-combustion-chamber main catalyst (116) is provided at least partially in front of a linear line orthogonal to the central axis of the cylinder hole (Cy) and orthogonal to the central axis of the crankshaft (Cr), in the front-rear direction of the straddled vehicle.

6. The straddled vehicle (80) according to any one of claims 1 to 5, wherein, the single-combustion-chamber main catalyst (116) is provided so that a path length from the one combustion chamber (106) to the upstream end of the single-combustion-chamber main catalyst (116) is shorter than a path length from the downstream end of the single-combustion-chamber main catalyst to the discharge port (112e).

7. The straddled vehicle (80) according to any one of claims 1 to 6, wherein, the single-combustion-chamber main catalyst (116) is provided so that the path length from the one combustion chamber (106) to the upstream end of the single-combustion-chamber main catalyst (116) is shorter than a path length from the downstream end of the single-combustion-chamber main catalyst to the downstream end of the single-combustion-chamber exhaust pipe (111).

8. The straddled vehicle (80) according to any one of claims 1 to 7, wherein, the at least one vehicle component (86, 87) includes:
a seat (86) supported by the vehicle body frame; and
a vehicle body cover (87) which is partially provided below a front portion of the seat, below a left portion of the seat, and below a right portion of the seat, and
a foot board (85) is provided at a position which is frontward of the seat and at an upper portion of the vehicle body frame (81).

9. The vehicle (80) according to any one of claims 1 to 8, wherein, the single-combustion-chamber exhaust pipe (111) includes a catalyst-provided passage member (117b) where the single-combustion-chamber main catalyst (116) is provided, an upstream passage member (117a) connected to the upstream end of the catalyst-provided passage member (117b), and a downstream passage member (117c) connected to the downstream end of the catalyst-provided passage member,
a cross-sectional area of the catalyst-provided passage member (117b) cut along the direction orthogonal to the flow direction of the exhaust gas is larger than a cross-sectional area of the upstream passage member (117a) cut along a direction orthogonal to the flow direction of the exhaust gas in at least a part of the upstream passage member, and the cross-sectional area of the catalyst-provided passage member (117b) is larger than a cross-sectional area of the downstream passage member (117c) cut along a direction orthogonal to the flow direction of the exhaust gas in at least a part of the downstream passage member.

10. The straddled vehicle (80) according to any one of claims 1 to 9, wherein, the single-cylinder four-stroke engine unit (93) includes a single-combustion-chamber upstream sub-catalyst (200) which is provided upstream in the flow direction of the single-combustion-chamber main catalyst (116) in the single-combustion-chamber cylinder exhaust passage member (108) or the single-combustion-chamber exhaust pipe (111), the single-combustion-chamber upstream sub-catalyst (200) being configured to purify the exhaust gas.

11. The straddled vehicle (80) according to any one of claims 1 to 10, wherein, the single-cylinder four-stroke engine unit (93) includes
a single-combustion-chamber downstream sub-catalyst (500) which is provided downstream in the flow direction of the single-combustion-chamber main catalyst (116) in the single-combustion-chamber cylinder exhaust passage member (108), the single-combustion-chamber exhaust pipe (111), or the single-combustion-chamber silencer (112), the single-combustion-chamber downstream sub-catalyst (500) being configured to purify the exhaust gas.

12. The straddled vehicle (80) according to any one of claims 1 to 11, wherein, at least a part of the single-combustion-chamber exhaust pipe (111), which is upstream in the flow direction of the single-combustion-chamber main catalyst (116), is formed by a multi-walled pipe which includes an inner pipe (601) and at least one outer pipe (602) covering the inner pipe.

13. The straddled vehicle (80) according to any one of claims 1 to 12, wherein, the single-combustion-chamber exhaust pipe member includes a catalyst-provided passage member (117b) in which the single-combustion-chamber main catalyst (116) is provided, and
the single-cylinder four-stroke engine unit (93) includes
a catalyst protector (700) which at least partially covers an outer surface of the catalyst-provided passage member (117b).

## Patentansprüche

1. Ein Grätschsitzfahrzeug (80), das folgende Merkmale aufweist:
eine Einzylinder-Viertakt-Motoreinheit (93);
einen Fahrzeugkörperrahmen (81), der die Einzylinder-Viertakt-Motoreinheit trägt; und
zumindest eine Fahrzeugkomponente (86, 87), die zumindest teilweise über der Einzylinder-Viertakt-Motoreinheit vorgesehen ist,
wobei die Einzylinder-Viertakt-Motoreinheit (93) folgende Merkmale umfasst:
einen Motorhauptkörper (94), der ein horizontales Zylinderbauglied (99) umfasst, in dem eine Verbrennungskammer (106), die teilweise durch eine Innenoberfläche eines Zylinderlochs (101a) gebildet ist, und ein Einzel-Verbrennungskammer-Zylinderablassdurchgangsbauglied (108), in dem Abgas fließt, das von der einen Verbrennungskammer (106) abgelassen wird, gebildet sind, wobei das horizontale Zylinderbauglied (99) vorgesehen ist, so dass eine Mittelachse des Zylinderlochs (Cy) sich in einer Vorwärts/Rückwärts-Richtung des Grätschsitzfahrzeugs (80) erstreckt, wobei der Motorhauptkörper (94) von dem Fahrzeugkörperrahmen (81) durch einen Schwenkträger (120) schwenkbar getragen wird und der Motorhauptkörper (94) unter der zumindest einen Fahrzeugkomponente vorgesehen ist;
ein Einzel-Verbrennungskammer-Ablassrohr (111), das mit einem stromabwärtigen Ende des Einzel-Verbrennungskammer-Zylinderablassdurchgangsbauglieds (108) des Motorhauptkörpers (94) verbunden ist;
einen Einzel-Verbrennungskammer-Dämpfer (112), der ein Auslasstor (112e) umfasst, das zu der Atmosphäre freigelegt ist, wobei der Dämpfer (112) mit dem Einzel-Verbrennungskammer-Ablassrohr (111) verbunden ist, um es zu ermöglichen, dass das Abgas von einem stromabwärtigen Ende des Einzel-Verbrennungskammer-Ablassrohrs zu dem Auslasstor fließt, und der Dämpfer (112) konfiguriert ist, um Schall zu reduzieren, der durch das Abgas erzeugt wird; und
einen Einzel-Verbrennungskammer-Hauptkatalysator (116), der in dem Einzel-Verbrennungskammer-Ablassrohr (111) vorgesehen ist, wobei die Länge des Einzel-Verbrennungskammer-Hauptkatalysators (116) in einer Flussrichtung des Abgases länger ist als die maximale Breite des Einzel-Verbrennungskammer-Hauptkatalysators in einer Richtung orthogonal zu der Flussrichtung, wobei der Einzel-Verbrennungskammer-Hauptkatalysator (116) zumindest teilweise rechts von einem rechten Ende des Schwenkträgers (120) oder links von einem linken Ende des Schwenkträgers in einer Links/Rechts-Richtung des Grätschsitzfahrzeugs vorgesehen ist, wobei der Einzel-Verbrennungskammer-Hauptkatalysator (116) zumindest teilweise auf der Außenseite des Motorhauptkörpers (94) vorgesehen ist, wenn das Grätschsitzfahrzeug in einer Richtung von oben nach unten gesehen wird und der Einzel-Verbrennungskammer-Hauptkatalysator (116) das Abgas reinigt, das von der einen Verbrennungskammer überwiegend in einem Ablassweg von der einen Verbrennungskammer (106) zu dem Auslasstor (112e) abgelassen wird.

2. Das Grätschsitzfahrzeug (80) gemäß Anspruch 1, bei dem der Schwenkträger (120) folgende Merkmale umfasst:
eine Verbindungskomponente (122R, 122L), die durch den Fahrzeugkörperrahmen (81) schwenkbar getragen wird; und
einen Motorträger (124R, 124L), der einen Teil des Motorhauptkörpers (94) bildet und mit der Verbindungskomponente verbunden ist, um schwenkbar zu sein.

3. Das Grätschsitzfahrzeug (80) gemäß Anspruch 1 oder 2, bei dem die Einzylinder-Viertakt-Motoreinheit (93) folgende Merkmale umfasst:
einen Lüfter (97), der links oder rechts von der Mitte in der Links/Rechts-Richtung des Grätschsitzfahrzeugs (80) vorgesehen ist und konfiguriert ist, einen Luftfluss zum Kühlen des Motorhauptkörpers (94) zu erzeugen, und
der Einzel-Verbrennungskammer-Hauptkatalysator (116) und der Lüfter (97) in der Links/Rechts-Richtung des Grätschsitzfahrzeugs auf der gleichen Seite von der Mitte vorgesehen sind.

4. Das Grätschsitzfahrzeug (80) gemäß einem der Ansprüche 1 bis 3, bei dem der Motorhauptkörper (94) ein Kurbelgehäusebauglied (98) umfasst, das eine Kurbelwelle (104) umfasst, die sich in einer Links/Rechts-Richtung des Grätschsitzfahrzeugs erstreckt und
der Einzel-Verbrennungskammer-Hauptkatalysator (116) in einer Vorwärts/Rückwärts-Richtung des Grätschsitzfahrzeugs zumindest teilweise vor der Mittelachse der Kurbelwelle (Cr) vorgesehen ist.

5. Das Grätschsitzfahrzeug (80) gemäß einem der Ansprüche 1 bis 4, bei dem der Motorhauptkörper (94) ein Kurbelgehäusebauglied (98) umfasst, das eine Kurbelwelle (104) umfasst, die sich in einer Links/Rechts-Richtung des Grätschsitzfahrzeugs erstreckt und
wenn das Grätschsitzfahrzeug in der Links/Rechts-Richtung betrachtet wird, der Einzel-Verbrennungskammer-Hauptkatalysator (116) in der Vorwärts-RückwärtsRichtung des Grätschsitzfahrzeugs zumindest teilweise vor einer geraden Linie orthogonal zu der Mittelachse des Zylinderlochs (Cy) und orthogonal zu der Mittelachse der Kurbelwelle (Cr) vorgesehen ist.

6. Das Grätschsitzfahrzeug (80) gemäß einem der Ansprüche 1 bis 5, bei dem der Einzel-Verbrennungskammer-Hauptkatalysator (116) vorgesehen ist, so dass eine Weglänge von der einen Verbrennungskammer (106) zu dem stromaufwärtigen Ende des Einzel-Verbrennungskammer-Hauptkatalysators (116) kürzer ist als eine Weglänge von dem stromabwärtigen Ende des Einzel-Verbrennungskammer-Hauptkatalysators zu dem Auslasstor (112e).

7. Das Grätschsitzfahrzeug (80) gemäß einem der Ansprüche 1 bis 6, bei dem der Einzel-Verbrennungskammer-Hauptkatalysator (116) vorgesehen ist, so dass die Weglänge von der einen Verbrennungskammer (106) zu dem stromaufwärtigen Ende des Einzel-Verbrennungskammer-Hauptkatalysators (116) kürzer ist als eine Weglänge von dem stromabwärtigen Ende des Einzel-Verbrennungskammer-Hauptkatalysators zu dem stromabwärtigen Ende des Einzel-Verbrennungskammer-Ablassrohrs (111).

8. Das Grätschsitzfahrzeug (80) gemäß einem der Ansprüche 1 bis 7, bei dem die zumindest eine Fahrzeugkomponente (86, 87) folgende Merkmale umfasst:
einen Sitz (86), der durch den Fahrzeugkörperrahmen getragen wird; und
eine Fahrzeugkörperabdeckung (87), die teilweise unter einem Vorderabschnitt des Sitzes, unter einem linken Abschnitt des Sitzes und unter einem rechten Abschnitt des Sitzes vorgesehen ist, und
eine Fußstütze (85) an einer Position vorgesehen ist, die sich vor dem Sitz und an einem oberen Abschnitt des Fahrzeugkörperrahmens (81) befindet.

9. Das Fahrzeug (80) gemäß einem der Ansprüche 1 bis 8, bei dem das Einzel-Verbrennungskammer-Ablassrohr (111) ein durch den Katalysator bereitgestelltes Durchgangsbauglied (117b), wo der Einzel-Verbrennungskammer-Hauptkatalysator (116) vorgesehen ist, ein stromaufwärtiges Durchgangsbauglied (117a), das mit dem stromaufwärtigen Ende des durch den Katalysator vorgesehenen Durchgangsbauglieds (117b) verbunden ist, und ein stromabwärtiges Durchgangsbauglied (117c) umfasst, das mit dem stromabwärtigen Ende des durch den Katalysator bereitgestellten Durchgangsbauglieds verbunden ist,
ein Querschnittsbereich des durch den Katalysator bereitgestellten Durchgangsbauglieds (117b), geschnitten entlang der Richtung orthogonal zu der Flussrichtung des Abgases, größer ist als ein Querschnittsbereich des stromaufwärtigen Durchgangsbauglieds (117a), geschnitten entlang einer Richtung orthogonal zu der Flussrichtung des Abgases in zumindest einem Teil des stromaufwärtigen Durchgangsbauglieds, und der Querschnittsbereich des durch den Katalysator bereitgestellten Durchgangsbauglieds (117b) größer ist als ein Querschnittsbereich des stromabwärtigen Durchgangsbauglieds (117c), geschnitten entlang einer Richtung orthogonal zu der Flussrichtung des Abgases in zumindest einem Teil des stromabwärtigen Durchgangsbauglieds.

10. Das Grätschsitzfahrzeug (80) gemäß einem der Ansprüche 1 bis 9, bei dem die Einzylinder-Viertakt-Motoreinheit (93) folgende Merkmale umfasst:
einen stromaufwärtigen Einzel-Verbrennungskammer-Teilkatalysator (200), der stromaufwärts in der Flussrichtung des Einzel-Verbrennungskammer-Hauptkatalysators (116) in dem Einzel-Verbrennungskammer-Zylinderablassdurchgangsbauglied (108) oder dem Einzel-Verbrennungskammer-Ablassrohr (111) vorgesehen ist, wobei der stromaufwärtige Einzel-Verbrennungskammer-Teilkatalysator (200) konfiguriert ist, das Abgas zu reinigen.

11. Das Grätschsitzfahrzeug (80) gemäß einem der Ansprüche 1 bis 10, bei dem die Einzylinder-Viertakt-Motoreinheit (93) folgendes Merkmal umfasst:
einen stromabwärtigen Einzel-Verbrennungskammer-Teilkatalysator (500), der stromabwärts in der Flussrichtung des Einzel-Verbrennungskammer-Hauptkatalysators (116) in dem Einzel-Verbrennungskammer-Zylinderablassdurchgangsbauglied (108), dem Einzel-Verbrennungskammer-Ablassrohr (111) oder dem Einzel-Verbrennungskammer-Dämpfer (112) vorgesehen ist, wobei der stromabwärtige Einzel-Verbrennungskammer-Teilkatalysator (500) konfiguriert ist, das Abgas zu reinigen.

12. Das Grätschsitzfahrzeug (80) gemäß einem der Ansprüche 1 bis 11, bei dem zumindest ein Teil des Einzel-Verbrennungskammer-Ablassrohrs (111), das in der Flussrichtung des Einzel-Verbrennungskammer-Hauptkatalysators (116) stromaufwärts liegt, durch ein mehrwandiges Rohr gebildet ist, das ein Innenrohr (601) und zumindest ein Außenrohr (602) umfasst, das das Innenrohr bedeckt.

13. Das Grätschsitzfahrzeug (80) gemäß einem der Ansprüche 1 bis 12, bei dem das Einzel-Verbrennungskammer-Ablassrohrbauglied ein durch einen Katalysator bereitgestelltes Durchgangsbauglied (117b) umfasst, in dem der Einzel-Verbrennungskammer-Hauptkatalysator (116) vorgesehen ist und
die Einzylinder-Viertakt-Motoreinheit (93) folgendes Merkmal umfasst:
eine Katalysatorschutzvorrichtung (700), die eine Außenoberfläche des durch den Katalysator bereitgestellten Durchgangsbauglieds (117b) zumindest teilweise bedeckt.

## Revendications

1. Véhicule à enfourcher (80) comprenant: une unité de moteur à quatre temps monocylindre (93);
un châssis de carrosserie de véhicule (81) supportant l'unité de moteur à quatre temps monocylindre; et
au moins un composant de véhicule (86, 87) qui est prévu au moins partiellement au-dessus de l'unité de moteur à quatre temps monocylindre,
l'unité de moteur à quatre temps monocylindre (93) comportant:
un corps principal de moteur (94) comportant un élément de cylindre horizontal (99) dans lequel une chambre de combustion (106) est partiellement formée par une surface intérieure d'un trou de cylindre (101a) et un élément de passage d'échappement de cylindre de chambre de combustion unique (108) dans lequel sont formés des flux de gaz d'échappement évacué de la chambre de combustion unique (106), l'élément de cylindre horizontal (99) étant prévu de sorte qu'un axe central du trou de cylindre (Cy) s'étende dans une direction avant-arrière du véhicule à enfourcher (80), le corps principal de moteur (94) étant supporté de manière pivotante par le châssis de carrosserie de véhicule (81) par un support pivotant (120), et le corps principal de moteur (94) étant prévu au-dessous de l'au moins un composant de véhicule;
un tuyau d'échappement de chambre de combustion unique (111) connecté à une extrémité aval de l'élément de passage d'échappement de cylindre à chambre de combustion unique (108) du corps principal de moteur (94);
un silencieux de chambre de combustion unique (112) comportant un orifice de décharge (112e) exposé à l'atmosphère, le silencieux (112) étant connecté au tuyau d'échappement de chambre de combustion unique (111) pour permettre que le gaz d'échappement circule d'une extrémité aval du tuyau d'échappement de chambre de combustion unique vers l'orifice de décharge, et le silencieux (112) étant configuré pour réduire le bruit généré par le gaz d'échappement; et
un catalyseur principal de chambre de combustion unique (116) prévu dans le tuyau d'échappement de chambre de combustion unique (111), la longueur du catalyseur principal de chambre de combustion unique (116) dans une direction de circulation du gaz d'échappement étant plus grande que la largeur maximale du catalyseur principal de chambre de combustion unique dans une direction orthogonale à la direction de circulation, le catalyseur principal de chambre de combustion unique (116) étant prévu au moins partiellement à droite d'une extrémité droite du support pivotant (120) ou à gauche d'un côté gauche du support pivotant dans une direction gauche-droite du véhicule à enfourcher, le catalyseur principal de chambre de combustion unique (116) étant au moins partiellement prévu du côté extérieur du corps principal de moteur (94) lorsque le véhicule à enfourcher est vu dans une direction de haut en bas, et le catalyseur principal de chambre de combustion unique (116) épurant le gaz d'échappement évacué de la chambre de combustion dans la plus grande mesure dans un trajet d'évacuation de la chambre de combustion unique (106) à l'orifice de décharge (112e).

2. Véhicule à enfourcher (80) selon la revendication 1, dans lequel le support pivotant (120) comporte:
un composant de liaison (122R, 122L) supporté de manière pivotante par le châssis de carrosserie de véhicule (81); et
un support de moteur (124R, 124L) constituant une partie du corps principal de moteur (94) et connecté au composant de liaison de manière à être pivotant.

3. Véhicule à enfourcher (80) selon la revendication 1 ou 2, dans lequel l'unité de moteur à quatre temps monocylindre (93) comporte
un ventilateur (97) qui est prévu à gauche ou à droite du centre dans la direction gauche-droite du véhicule à enfourcher (80) et qui est configuré pour générer un flux d'air pour refroidir le corps principal de moteur (94), et
le catalyseur principal de chambre de combustion unique (116) et le ventilateur (97) sont prévus du même côté du centre dans la direction gauche-droite du véhicule à enfourcher.

4. Véhicule à enfourcher (80) selon l'une quelconque des revendications 1 à 3, dans lequel le corps principal de moteur (94) comporte un élément de carter (98) comportant un vilebrequin (104) qui s'étend dans une direction gauche-droite du véhicule à enfourcher, et
le catalyseur principal de chambre de combustion unique (116) est prévu au moins partiellement en avant de l'axe central du vilebrequin (Cr) dans la direction avant-arrière du véhicule à enfourcher.

5. Véhicule à enfourcher (80) selon l'une quelconque des revendications 1 à 4, dans lequel le corps principal de moteur (94) comporte un élément de carter (98) comportant un vilebrequin (104) qui s'étend dans une direction gauche-droite du véhicule à enfourcher, et
lorsque le véhicule à enfourcher est vu dans la direction gauche-droite, le catalyseur principal de chambre de combustion unique (116) est prévu au moins partiellement devant une ligne linéaire orthogonale à l'axe central du trou de cylindre (Cy) et orthogonale à l'axe central du vilebrequin (Cr), dans la direction avant-arrière du véhicule à enfourcher.

6. Véhicule à enfourcher (80) selon l'une quelconque des revendications 1 à 5, dans lequel le catalyseur principal de chambre de combustion unique (116) est prévu de sorte qu'une longueur de trajet de la chambre de combustion unique (106) à l'extrémité amont du catalyseur principal de chambre de combustion unique (116) soit plus courte qu'une longueur de trajet de l'extrémité aval du catalyseur principal de chambre de combustion unique à l'orifice de décharge (112e).

7. Véhicule à enfourcher (80) selon l'une quelconque des revendications 1 à 6, dans lequel le catalyseur principal de chambre de combustion unique (116) est prévu de sorte que la longueur de trajet de la chambre de combustion unique (106) à l'extrémité amont du catalyseur principal de chambre de combustion unique (116) soit plus courte qu'une longueur de trajet de l'extrémité aval du catalyseur principal de chambre de combustion unique à l'extrémité aval du tuyau d'échappement de chambre de combustion unique (111).

8. Véhicule à enfourcher (80) selon l'une quelconque des revendications 1 à 7, dans lequel l'au moins un composant de véhicule (86, 87) comporte:
un siège (86) supporté par le châssis de carrosserie de véhicule; et
un couvercle de carrosserie de véhicule (87) qui est partiellement prévu sous une partie avant du siège, sous une partie gauche du siège et sous une partie droite du siège, et
un marchepied (85) est prévu en une position qui se situe à l'avant du siège et dans une partie supérieure du châssis de carrosserie de véhicule (81).

9. Véhicule (80) selon l'une quelconque des revendications 1 à 8, dans lequel le tuyau d'échappement de chambre de combustion unique (111) comporte un élément de passage pourvu de catalyseur (117b) dans lequel est prévu le catalyseur principal de chambre de combustion unique (116), un élément de passage amont (117a) connecté à l'extrémité amont de l'élément de passage pourvu de catalyseur (117b), et un élément de passage aval (117c) connecté à l'extrémité aval de l'élément de passage pourvu de catalyseur,
une superficie de section de l'élément de passage pourvu de catalyseur (117b) découpé dans la direction orthogonale à la direction de circulation du gaz d'échappement est plus grande qu'une superficie de section de l'élément de passage amont (117a) découpé dans une direction orthogonale à la direction de circulation du gaz d'échappement dans au moins une partie de l'élément de passage amont, et la superficie de section de l'élément de passage pourvu de catalyseur (117b) est plus grande qu'une superficie de section de l'élément de passage aval (117c) découpé dans une direction orthogonale à la direction de circulation de gaz d'échappement dans au moins une partie de l'élément de passage aval.

10. Véhicule à enfourcher (80) selon l'une quelconque des revendications 1 à 9, dans lequel l'unité de moteur à quatre temps monocylindre (93) comporte
un sous-catalyseur amont de chambre de combustion unique (200) qui est prévu en amont dans la direction de circulation du catalyseur principal de chambre de combustion unique (116) dans l'élément de passage d'échappement de cylindre de chambre de combustion unique (108) ou le tuyau d'échappement de chambre de combustion unique (111), le sous-catalyseur amont de chambre de combustion unique (200) étant configuré pour purifier le gaz d'échappement.

11. Véhicule à enfourcher (80) selon l'une quelconque des revendications 1 à 10, dans lequel l'unité de moteur à quatre temps monocylindre (93) comporte
un sous-catalyseur aval de chambre de combustion unique (500) qui est prévu en aval dans la direction de circulation du catalyseur principal de chambre de combustion unique (116) dans l'élément de passage d'échappement de cylindre de chambre de combustion unique (108), le tuyau d'échappement de chambre de combustion unique (111), ou le silencieux de chambre de combustion unique (112), le sous-catalyseur aval de chambre de combustion unique (500) étant configuré pour purifier le gaz d'échappement.

12. Véhicule à enfourcher (80) selon l'une quelconque des revendications 1 à 11, dans lequel au moins une partie du tuyau d'échappement de chambre de combustion unique (111), qui se trouve en amont dans la direction de circulation du catalyseur principal de chambre de combustion unique (116), est formée par un tuyau à parois multiples qui comporte un tuyau intérieur (601) et au moins un tuyau extérieur (602) recouvrant le tuyau intérieur.

13. Véhicule à enfourcher (80) selon l'une quelconque des revendications 1 à 12, dans lequel l'élément de tuyau d'échappement de chambre de combustion unique comporte un élément de passage pourvu de catalyseur (117b) dans lequel est prévu le catalyseur principal de chambre de combustion unique (116), et
l'unité de moteur à quatre temps monocylindre (93) comporte
un protecteur de catalyseur (700) qui recouvre au moins partiellement une surface extérieure de l'élément de passage pourvu de catalyseur (117b).
